# EUROPEAN PATENT SPECIFICATION

(11) **EP 3 312 759 B1**
(45) Date of publication and mention of the grant of the patent: **24.07.2019**
(21) Application number: 17196516.3
(22) Date of filing: 16.10.2017
(51) Int. Cl.: G06F 21/83, G06F 21/34, G06F 21/40, H04L 9/32, G06F 21/32, G06F 21/42, H04W 12/06, G06F 21/71, G06F 21/36, H04L 29/06

(54) **SECURE ELEMENT (SE), A METHOD OF OPERATING THE SE, AND AN ELECTRONIC DEVICE INCLUDING THE SE**
SICHERES ELEMENT, VERFAHREN ZUM BETRIEB DES SICHEREN ELEMENTS UND ELEKTRONISCHE VORRICHTUNG MIT DEM SICHEREN ELEMENT
ÉLÉMENT SÉCURISÉ (SOI), PROCÉDÉ D'EXPLOITATION DU SOI ET DISPOSITIF ÉLECTRONIQUE COMPRENANT LE SOI

(30) Priority: 21.10.2016 KR 20160137885; 24.01.2017 KR 20170011139
(43) Date of publication of application: 25.04.2018
(73) Proprietor: Samsung Electronics Co., Ltd., Gyeonggi-do 16677 (KR)
(72) Inventor: KIM, Ki-hong, Osan-si, Gyeonggi-do (KR); HAN, Min-ja, Seoul (KR)
(74) Representative: Kuhnen & Wacker Patent- und Rechtsanwaltsbüro PartG mbB

(56) References cited:
- EP-A1- 2 942 733
- US-A1- 2013 266 141
- US-A1- 2016 048 840

## Description

### Technical Field

Exemplary embodiments of the inventive concept relate to a secure element (SE), and more particularly, to an SE that is activated via user authentication, a method of operating the SE, and an electronic device including the SE.

### Discussion of Related Art

Important information, such as an identifier (ID), a password, and a bank account number necessary for electronic payment or a server login, is typically pre-stored in a safe storage space. The storage space can be activated by user authentication to thereby perform electronic payment or a server login. To safely store important information about a user, mobile devices store the important information in an embedded secure element (eSE) and perform a user authentication to activate the eSE when using the information stored in the eSE.

From Patent document US 2013/0266141 A1 it is known a handheld wireless communication device including a data input device, which is configured to receive first input data provided by a user, a main processor and a security processor. The security processor includes an input interface and input processing block configured to extract second data from a first portion of the first input data using, for example, a data mapping operation. The security process also includes an encryption circuit, which is configured to generate secure data from the extracted second data by encrypting the extracted second data using an encryption key, and a data/control interface, which is configured to transfer the secure data to the main processor.

From patent document EP 2 942 733 A1 there is known an architecture for data processing platform using a dedicated security device for user interaction, the data processing platform comprising: a processing device; and a security device communicatively coupled with the processing device, the security device being adapted for receiving input data and providing the input data to the processing devices only if the input data are associated with a predetermined security level range, e.g. if the processing device is in a secure operating mode or if input data are considered by the security device to have a security level in the predetermined security level range.

From patent document US 2016/0048840 A1 there is known an electronic device including a first memory unit for storing a non-payment application, a first processor, a fingerprint sensing unit and a security element including a second memory unit and the second processor. The second memory unit stores a payment application and use of fingerprint information. When the second processor executes the payment information, the fingerprint sensing unit captures a fingerprint image of a user's finger and the second processor transmits the fingerprint image to the first processor via the secure channel. The first processor calculates biometric characteristics of the fingerprint image to generate to-be-recognized fingerprint information which is transmitted to the second processor via the secure channel. When the second processor determines that the to-be-recognized fingerprint information matches the use of fingerprint information, the second processor generates an authentication signal for payment transaction.

### SUMMARY

According to an exemplary embodiment of the inventive concept, there is provided a secure element (SE) including: a storage configured to store security data; a first interface configured to receive a user input from an external input device; a processor configured to perform a user authentication, based on the user input, and activate the storage when the user authentication succeeds; and a second interface configured to transmit security information based on the security data to an external processor.

According to an exemplary embodiment of the inventive concept, there is provided a method of operating an SE, including: receiving a user authentication input from an input device; determining activation or deactivation of a storage that stores security data, based on the user authentication input; and transmitting security information based on the security data to an external processor when the storage is activated.

According to an exemplary embodiment of the inventive concept, there is provided an electronic device including: an input device configured to sense a user input; an SE configured to receive the user input from the input device and determine, based on the user input, whether to perform a security operation; and an application processor (AP) configured to exchange security information with the SE when the SE executes the security operation.

According to an exemplary embodiment of the inventive concept, there is provided a secure device including: a first interface configured to receive a user input directly from an input device; a memory configured to store security data; a first processor configured to authenticate the user input; and a second interface configured to output secure information to a second processor when the user input is authenticated, wherein the secure information is based on the security data.

### BRIEF DESCRIPTION OF THE DRAWINGS

The above and other features of the inventive concept will be more clearly understood by describing in detail exemplary embodiments thereof with reference to the accompanying drawings in which:
FIG. 1 is a block diagram of an electronic device according to an exemplary embodiment of the inventive concept;
FIG. 2 is a block diagram of a secure element (SE) according to an exemplary embodiment of the inventive concept;
FIG. 3 is a flowchart of a method of operating an SE, according to an exemplary embodiment of the inventive concept;
FIGS. 4, 5, 6 and 7 are flowcharts of methods of operating an electronic device, according to exemplary embodiments of the inventive concept;
FIG. 8 is a block diagram of an electronic device according to an exemplary embodiment of the inventive concept;
FIG. 9 is a flowchart of an embedded secure element (eSE) activating method performed by the electronic device of FIG. 8, according to an exemplary embodiment of the inventive concept;
FIG. 10 is a block diagram of an electronic device according to an exemplary embodiment of the inventive concept;
FIG. 11 is a flowchart of an eSE activating method performed by the electronic device of FIG. 10, according to an exemplary embodiment of the inventive concept;
FIGS. 12 and 13 are block diagrams of electronic devices according to exemplary embodiments of the inventive concept;
FIG. 14 is a block diagram of a mobile terminal according to an exemplary embodiment of the inventive concept;
FIG. 15 is a block diagram of an operation of a mobile terminal including an eSE, according to an exemplary embodiment of the inventive concept; and
FIG. 16 is a schematic diagram of an operation of a smart television (TV) including an eSE, according to an exemplary embodiment of the inventive concept.

### DETAILED DESCRIPTION OF THE EMBODIMENTS

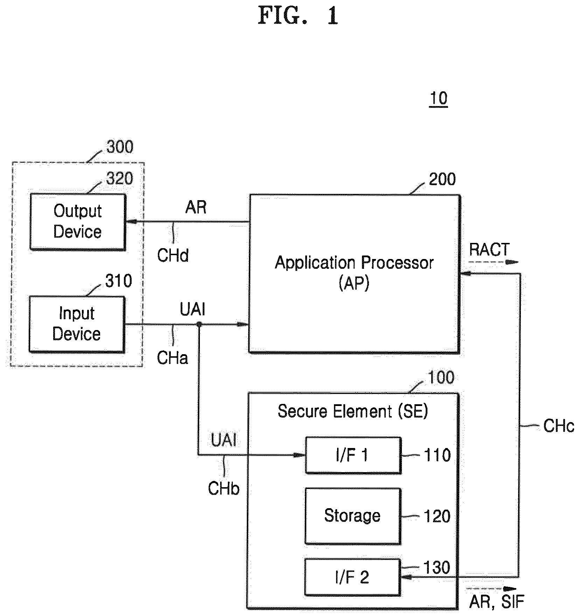

FIG. 1 is a block diagram of an electronic device 10 according to an exemplary embodiment of the inventive concept.

Referring to FIG. 1, the electronic device 10 may include an application processor (AP) 200, a secure element (SE) 100, and an input/output (I/O) device 300. The I/O device 300 may include an input device 310 and an output device 320. The electronic device 10 may further include other components, such as memory and a network module.

The electronic device 10 may include, for example, a smartphone, a tablet personal computer (PC), a mobile phone, an e-book reader, a desktop PC, a laptop PC, a personal digital assistant (PDA), a portable multimedia player (PMP), an MP3 player, a smart television (TV), a medical apparatus, a camera, or a wearable device. However, the inventive concept is not limited thereto, and the electronic device 10 may be any of various types of devices including the SE 100.

The AP 200 may control an overall operation of the electronic device 10 and may control at least one component other than the AP 200. The AP 200 may drive an operating system (OS) and an application, and may perform various calculations or data processing. For example, the AP 200 may be a dedicated processor (such as an embedded processor) for performing a particular operation, or a general-purpose processor that may execute at least one software program stored in a memory device to perform a particular operation. For example, the AP 200 may be a central processing unit (CPU), a microprocessor, or a communication processor (CP). According to an exemplary embodiment of the inventive concept, the AP 200 may include an area for performing general calculations, and an area for performing calculations associated with processing of security-related data. For example, the AP 200 may include a secure area and a non-secure area.

The AP 200 may directly or indirectly transmit data to or receive data from other components, for example, the SE 100 and the I/O device 300.

The input device 310 may receive one user input or a plurality of user inputs. The input device 310 may include input units, such as a touch pad, a touch screen, a keypad, an input button, a sensor (e.g., an image sensor, an infrared sensor, a motion sensor, or a bio-information sensor), a microphone, and an infrared (IR) receiver. The input device 310 may transmit a user input to the AP 200. According to an exemplary embodiment of the inventive concept, the user input may include a user authentication input UAI. According to an exemplary embodiment of the inventive concept, the user authentication input UAI may include knowledge-based authentication information or bio-based authentication information. The knowledge-based authentication information may include a motion pattern, a voice pattern, a touch pattern, a password, a personal identification number (PIN), image data, or character data. The bio-based authentication information may include fingerprint information, iris information, retina information, vein information, facial information, or voice information.

According to an exemplary embodiment of the inventive concept, as shown in FIG. 1, the input device 310 may directly transmit a user input to the AP 200 via a channel CHa. The channel CHa may include a single signal line or a plurality of signal lines. The channel CHa may transmit data according to an interfacing method set between the input device 310 and the AP 200. According to an exemplary embodiment of the inventive concept, the input device 310 may transmit a user input to the AP 200 via the SE 100.

The output device 320 may include an output unit, such as a display or a speaker. The output device 320 may receive a user interface (UI) or a result of processing according to the user input from the AP 200 via a channel CHd and may output the UI or the result of the processing. According to an exemplary embodiment of the inventive concept, the result of the processing may include a user authentication result AR. The above-described various interfaces are applicable to the channel CHd. The channel CHd may be the same as or different from the channel CHa. The AP 200 may provide information necessary for input to a user via the output device 320, and may also provide, via the output device 320, a response to a user input from the input device 310. For example, the AP 200 may control the output device 320 (or a driver or a circuit related to the output device 320) so that the output device 320 (e.g., a display) displays a pressed button, a signature, or a fingerprint information scan progress.

Although the input device 310 and the output device 320 are separate devices in the I/O device 300 of FIG. 1, the inventive concept is not limited thereto. According to an exemplary embodiment of the inventive concept, the input device 310 and the output device 320 may be a single module (e.g., a touch screen). In this case, the channel CHa and the channel CHd are the same channels, and the above-described various interfaces are applicable to the same channels.

The SE 100 may safely store security data and provide a protected command execution environment. The SE 100 may guarantee strong security against physical attacks or hacking. The SE 100 may be mounted in the form of a Universal Integrated Circuit Card (UICC) insertable into a slot of the electronic device 10, or may be embedded in the electronic device 10. For example, the SE 100 may be a detachable smart chip, and may be embedded in secure digital (SD) cards, subscriber identification module (SIM) cards, and financial smart cards. The SE 100 may be an embedded secure element (eSE) within a fixed chip of the electronic device 10.

The SE 100 may include a storage 120 that stores the security data. For example, the security data is important data that requires security, such as keys associated with encryption or decryption and a user's personal information (e.g., a password, bank account information, and an authentication certificate). When the security data is accessed, user authentication may be required.

The SE 100 may receive a user input, for example, the user authentication input UAI, from the input device 310, and may be activated based on the user authentication input UAI. The SE 100 may be activated when user authentication succeeds. When the SE 100 is activated, the SE 100 may perform a security operation requested by the AP 200 based on the security data stored in the storage 120. Accordingly, when the SE 100 is activated the storage 120 may be activated. As the storage 120 is activated, the storage 120 or the security data stored in the storage 120 may be accessed. For example, as the SE 100 is activated, security data may be written to the storage 120, or the security data may be read from the storage 120.

The SE 100 may further include a first interface 110 and a second interface 130. The SE 100 may receive a user input from the input device 310 via the first interface 110 and may transmit or receive security information SIF based on the security data to or from the AP 200 via the second interface 130. The first interface 110 and the second interface 130 may be interfacing circuits that transmit or receive data according to an interface between the SE 100 and another component (e.g., the AP 200 or the input device 310). For example, an interface and/or an interfacing method, such as an RGB interface, a CPU interface, a serial interface, a mobile display digital interface (MDDI), an inter integrated circuit (I2C) interface, a serial peripheral interface (SPI), an RS232 interface, a micro controller unit (MCU) interface, a mobile industry processor interface (MIPI), a displayport (DP) interface, an embedded displayport (eDP) interface, a universal serial bus (USB), or a high definition multimedia interface (HDMI), is applicable to the first interface 110 and/or the second interface 130. An interfacing method that is applied to the first interface 110 and an interfacing method that is applied to the second interface 130 may be the same as or different from each other.

The first interface 110 may receive a user input from the input device 310 via a channel CHb. For example, the first interface 110 may receive the user authentication input UAI. The first interface 110 may receive the user input by monitoring a data exchange between the input device 310 and the AP 200. Alternatively, the first interface 110 may receive the user input by operating as a master for the input device 310.

Access to the first interface 110 by the AP 200 is restricted. The first interface 110 receives the user input directly from the input device 310, rather than from the AP 200. For example, the first interface 110 does not receive a signal from the AP 200.

The second interface 130 may communicate with the AP 200 via a channel CHc, and may transmit the security information SIF based on the security data to the AP 200 when a user authentication succeeds. In other words, the SE 100 may transmit the security information SIF based on the security data to the AP 200 via the second interface 130, when the user authentication succeeds. The security information SIF may include the security data, results of calculations or data processing performed based on the security data, or encrypted data generated by encryption of the security data. According to an exemplary embodiment of the inventive concept, the SE 100 may receive the security information SIF from the AP 200 via the second interface 130, and may store the security data according to the security information SIF in the storage 120 when a user authentication succeeds.

According to an exemplary embodiment of the inventive concept, the SE 100 may receive an activation request RACT from the AP 200 via the second interface 130 and may receive a user input via the first interface 110 in response to the activation request RACT. For example, the activation request RACT may include a user authentication input reception request and/or a security operation request. For example, the security operation includes an encryption operation, a decryption operation, data processing, a security information request, or security information storage. The security operation may involve an operation of the SE 100 by using the security data.

The SE 100 may receive a user input, for example, the user authentication input UAI, in response to a security operation request, and may perform a requested security operation when a user authentication succeeds based on the user input. Alternatively, the SE 100 may receive a user input, for example, the user authentication input UAI, from the input device 310 in response to a user input reception request, and then, when receiving a security operation request from the AP 200, perform a requested security operation.

According to an exemplary embodiment of the inventive concept, the SE 100 may independently perform user authentication, based on the user authentication input UAI received via the first interface 110 and reference authentication information pre-stored in the SE 100. In this case, an authentication operation of receiving additional authentication information from the AP 200 via the second interface 130 and comparing the additional authentication information with the user authentication input UAI may be performed.

According to an exemplary embodiment of the inventive concept, the SE 100 may perform a user authentication in cooperation with the AP 200, based on the user authentication input UAI. For example, the AP 200 may perform a first authentication by comparing the user authentication input UAI with the pre-stored reference authentication information. When the first authentication succeeds, the AP 200 may transmit, as authentication information, the user authentication input UAI used during the first authentication to the SE 100. The SE 100 may perform a second authentication by comparing the user authentication input UAI received via the first interface 110 with the authentication information received via the second interface 130.

According to an exemplary embodiment of the inventive concept, each of the SE 100 and the AP 200 may perform a user authentication, based on the user authentication input UAI.

When the user authentication succeeds, the SE 100 is activated to perform a requested security operation. When the user authentication fails, the SE 100 is deactivated to refuse a requested security operation. The user authentication method performed by the SE 100 will be described in detail later.

The SE 100 may transmit a user authentication result to the AP 200 via the second interface 130. According to an exemplary embodiment of the inventive concept, when the user authentication fails, the AP 200 may control the input device 310 so that the input device 310 does not receive a user input for reattempting user authentication for a certain period of time. In other words, the input device 310 will be prevented from receiving a user input for a predetermined amount of time. Moreover, when the number of times a user authentication has been reattempted is equal to or greater than a certain number of times, the AP 200 may control the input device 310 so that the input device 310 receives no more user inputs.

As described above, the SE 100 of the electronic device 10 may receive the user authentication input UAI directly from the input device 310 and may perform a user authentication to activate the SE 100 based on the user authentication input UAI. The user authentication of the SE 100 may be a user authentication performed by software of the OS of the AP 200.

When the AP 200 performs a user authentication to activate the SE 100 based on the user authentication input UAI or transmits the user authentication input UAI to the SE 100, and weak points exist in software related to a user authentication process performed by the AP 200, a malicious program may activate the SE 100 without the user's knowledge. For example, the malicious program may create a virtual user authentication input UAI or detour the user authentication procedure to activate the SE 100 without the user's knowledge.

However, in the electronic device 10 according to the present embodiment, the SE 100 receives the user authentication input UAI directly from the input device 310 and performs a user authentication based on the received user authentication input UAI. This way, a malicious program executed in the AP 200 without the user's knowledge is unable to manipulate a result of the user authentication performed in the SE 100 and is unable to create a virtual user authentication input and transmit the created virtual user authentication input to the SE 100. Accordingly, in the electronic device 10 of the present embodiment, security of a user authentication process, which is performed to activate the SE 100, may be reinforced.

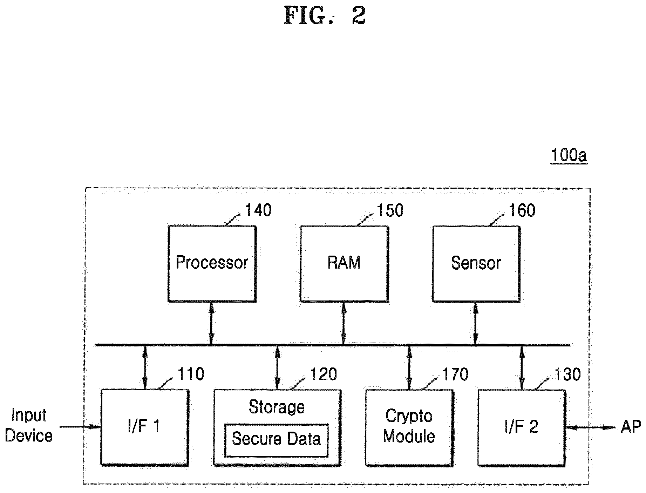

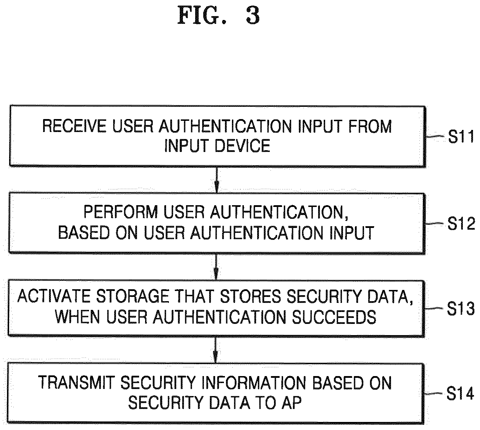

A structure of the SE 100 and a method of operating the SE 100 will now be described with reference to FIGS. 2 and 3.

FIG. 2 is a block diagram of an SE 100a according to an exemplary embodiment of the inventive concept. FIG. 2 illustrates an example of the SE 100 of FIG. 1. Accordingly, descriptions provided with reference to FIG. 1 may be equally applied to the embodiment of FIG. 2.

Referring to FIG. 2, the SE 100a may include a processor 140, a random-access memory (RAM) 150, a storage 120, a first interface 110, and a second interface 130. The SE 100a may further include an encryption/decryption module 170 (or crypto module) and a sensor 160.

The processor 140 may control an overall operation of the SE 100a and may perform a calculation or data processing that is requested by the AP 200 of FIG. 1. When the processor 140 receives an activation request from the AP 200, the processor 140 may perform a user authentication for activation. When the user authentication succeeds, the processor 140 may allow access to the storage 120, e.g., access to the security data. User authentication operations of the SE 100 according to exemplary embodiments of the inventive concept, which will be described later, may be performed by the processor 140. The processor 140 may be a CPU, a microprocessor, or a logic circuit.

The RAM 150 may operate as a working memory of an internal system of the SE 100a. The RAM 150 may include at least one of a volatile memory and a non-volatile memory. A control command code, control data, or authentication information used to control the SE 100 may be loaded onto the RAM 150. The processor 140 may control the SE 100a, based on the control command code or control data loaded onto the RAM 150. The control command code, the control data, or the authentication information may be stored in the storage 120 or in separate non-volatile memory.

The storage 120 may be a non-volatile memory. The storage 120 may store security data which may also be referred to as "secure data". The storage 120 may be activated when a user authentication succeeds, and thus, may store received data as the security data or read out the stored security data.

The first interface 110 may receive a user input from the input device 310 of FIG. 1. The first interface 110 may provide a user authentication input included in the received user input to the processor 140, and the processor 140 may perform a user authentication for activation, based on the user authentication input.

The second interface 130 may communicate with the AP 200 of FIG. 1. The second interface 130 may receive, from the AP 200, an activation request or security information SIF, e.g., data requested to be stored in the storage 120. For example, the activation request may include a user authentication input reception request and/or a security operation request. The second interface 130 may transmit, to the AP 200, security information SIF based on the security data or a user authentication result.

The crypto module 170 may perform an encryption operation or a decryption operation according to a request from the AP 200. The crypto module 170 may be implemented as hardware, software, or a combination of hardware and software. Although the crypto module 170 is separate from the processor 140 in FIG. 2, the inventive concept is not limited thereto. For example, the crypto module 170 may be implemented by the processor 140 executing an encryption or decryption command code loaded onto the RAM 150.

The sensor 160 may sense an external environment to protect the SE 100a. The sensor 160 may include, for example, a temperature sensor, a humidity sensor, a vibration sensor, and a pressure sensor. However, the inventive concept is not limited thereto, and any of various other types of sensors may be mounted on the SE 100a. When it is determined that the external environment of the SE 100 is abnormal, the sensor 160 may transmit an abnormal state notification signal to the processor 140. When the processor 140 receives a notification signal from the sensor 160, the processor 140 may determine the SE 100a to be deactivated, or interrupt an operation that is currently being conducted. In addition, the processor 140 may perform an operation for protecting the secure data, such as an operation of writing secure data being processed to the storage 120.

The SE 100a may receive a user input directly from the input device 310 via the first interface 110. For example, the SE 100a may receive a user authentication input directly from the input device 310 and may perform a user authentication based on the user authentication input. Accordingly, the user authentication input may be prevented from being manipulated, or a user authentication process for activating the SE 100a may be prevented from being detoured.

FIG. 3 is a flowchart of a method of operating an SE, according to an exemplary embodiment of the inventive concept. The method of FIG. 3 may be performed in the SE 100a of FIG. 2.

Referring to FIG. 3, in operation S11, the SE 100a may receive a user authentication input from the input device 310 of FIG. 1. According to an exemplary embodiment of the inventive concept, the first interface 110 may receive the user authentication input by monitoring a user input that is transmitted by the input device 310 to the AP 200. According to an exemplary embodiment of the inventive concept, the first interface 110 may receive the user authentication input from the input device 310 by operating as a master for the input device 310.

The SE 100a may perform a user authentication, based on the user authentication input, in operation S12. According to an exemplary embodiment of the inventive concept, the processor 140 may perform a user authentication by comparing the user authentication input with reference authentication information stored in the SE 100a and/or authentication information received from an external device (e.g., the AP 200 of FIG. 1). According to an exemplary embodiment of the inventive concept, the processor 140 may perform a user authentication by comparing the user authentication input with the reference authentication information stored in the SE 100a and checking an authentication result received from the external device.

In operation S13, when the user authentication succeeds, the storage 120 storing the security data may be activated. In other words, the SE 100a may be activated, and the processor 140 may access the storage 120.

In operation S14, the SE 100a may transmit security information SIF based on the security data to the AP 200. The processor 140 may read the security data from the storage 120 and may perform a security operation, such as an encryption operation, a decryption operation, or data processing, based on the security data. The second interface 130 may transmit security information SIF according to the security operation of the processor 140 to the AP 200. The security information SIF may include the security data, results of calculations or data processing performed based on the security data, or encrypted data generated by encrypting the security data. On the other hand, when the user authentication fails, the SE 100a may be deactivated and may refuse to perform a security operation requested by the AP 200. In other words, security operations requested by the AP 200 will be denied.

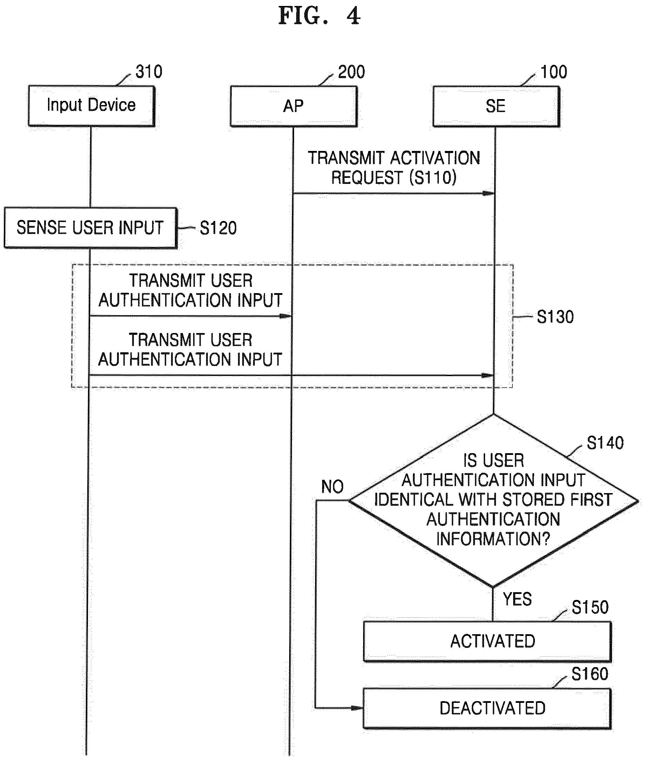

Methods of operating an electronic device including the SE 100 will now be described in detail with reference to FIGS. 4, 5, 6 and 7.

FIG. 4 is a flowchart of a method of operating an electronic device, according to an exemplary embodiment of the inventive concept. For example, the method of FIG. 4 is a user authentication method for activating an SE, and may be performed by the electronic device 10 of FIG. 1.

Referring to FIG. 4, in operation S110, the AP 200 may transmit an activation request to the SE 100. For example, the activation request may include a user authentication input reception request and/or a security operation request.

In operation S120, the input device 310 may sense a user input. The input device 310 may receive a user authentication input UAI for activating the SE 100, by sensing the user input.

In operation S130, the input device 310 may transmit the user authentication input UAI to the AP 200 and the SE 100. In other words, each of the AP 200 and the SE 100 may receive the user authentication input UAI from the input device 310. The AP 200 and the SE 100 may receive the user authentication input UAI from the input device 310 via different channels. For example, the SE 100 may receive the user authentication input UAI by monitoring a data exchange between the AP 200 and the input device 310 via the first interface 110 of FIG. 1.

In operation S140, the SE 100 may compare the user authentication input UAI with first authentication information stored therein, e.g., reference authentication information. For example, the SE 100 may determine whether the user authentication input UAI is the same as the first authentication information. Accordingly, the SE 100 may perform user authentication, based on the user authentication input UAI. For example, the first authentication information may be stored in the storage 120 of FIG. 1 or a separate non-volatile memory included in the SE 100.

In operation S150, when the user authentication input UAI is the same as the first authentication information, the SE 100 may determine that the user authentication has succeeded, and may be activated. The SE 100 may be activated to perform a security operation requested by the AP 200, based on the security data stored in the storage 120 of FIG. 1.

In operation S160, when the user authentication input UAI is different from the first authentication information, the SE 100 may determine that the user authentication has failed, and may be deactivated. The SE 100 may be deactivated such that it refuses to perform the security operation requested by the AP 200. For example, the SE 100 may issue a denial.

According to the current method of operating the electronic device, when activation of the SE 100 is requested, the SE 100 which guarantees strong security against physical attacks or hacking may receive the user authentication input UAI directly from the input device 310 and perform user authentication based on the received user authentication input UAI. This way, the security of a user authentication process for activating the SE 100 may be reinforced.

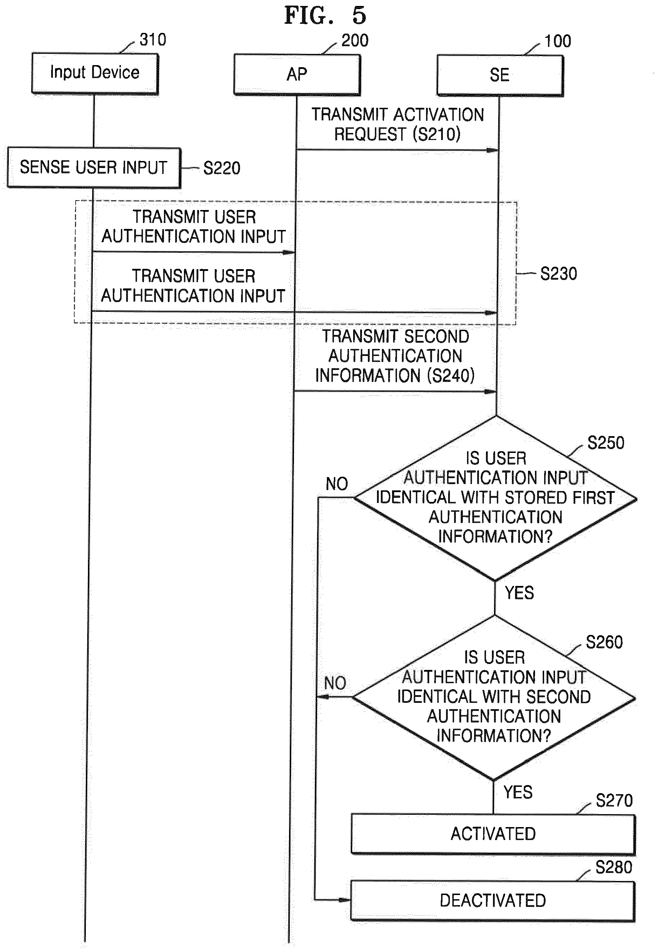

FIG. 5 is a flowchart of a method of operating an electronic device, according to an exemplary embodiment of the inventive concept. The method of FIG. 5 may be performed in the electronic device 10 of FIG. 1.

Referring to FIG. 5, in operation S210, the AP 200 may transmit an activation request to the SE 100. In operation S220, the input device 310 may sense a user input. In operation S230, a user authentication input obtained by sensing the user input may be transmitted by the input device 310 to the AP 200 and the SE 100. The operations S210, S220, and S230 of FIG. 5 are the same as the operations S110, S120, and S130 of FIG. 4, and thus, detailed descriptions thereof will be omitted herein.

In operation S240, the AP 200 may transmit second authentication information to the SE 100. The user authentication input received from the input device 310 may be transmitted to the SE 100 by the AP 200 as the second authentication information.

In operation S250, the SE 100 may compare the user authentication input with first authentication information stored therein, e.g., reference authentication information. For example, the SE 100 may determine whether the user authentication input is the same as the first authentication information. Accordingly, the SE 100 may perform a first user authentication. In operation S260, when the user authentication input is the same as the first authentication information, the SE 100 may compare the user authentication input with the second authentication information. For example, the SE 100 may determine whether the user authentication input is the same as the second authentication information. Accordingly, the SE 100 may perform a second user authentication. In other words, a dual authentication process may be performed by the SE 100.

In operation S270, when it is determined that the user authentication input is the same as the first authentication information and the second authentication information, the SE 100 may determine that the user authentication has succeeded, and may be activated.

In operation S280, when the user authentication input is different from the first authentication information or the second authentication information, the SE 100 may determine that the user authentication has failed, and may be deactivated.

In FIG. 5, operation S240 is performed prior to operation S250. However, the inventive concept is not limited thereto. Operation S240 may be performed after operation S250 is performed. For example, the AP 200 may receive a result representing a successful first user authentication from the SE 100, and may transmit the second authentication information to the SE 100 in response to the result.

As described above, the AP 200 transmits the user authentication input as the second authentication information to the SE 100. However, when the user authentication input is different from the second authentication information, it may be determined that an error has occurred while the user authentication input is being received or that an error has occurred in the AP 200. Accordingly, even when the user authentication input is the same as the first authentication information, the SE 100 may be deactivated when the user authentication input is not the same as the second authentication information. Because the SE 100 performs two stages of user authentication, the security of the user authentication of the electronic device 10 may be reinforced.

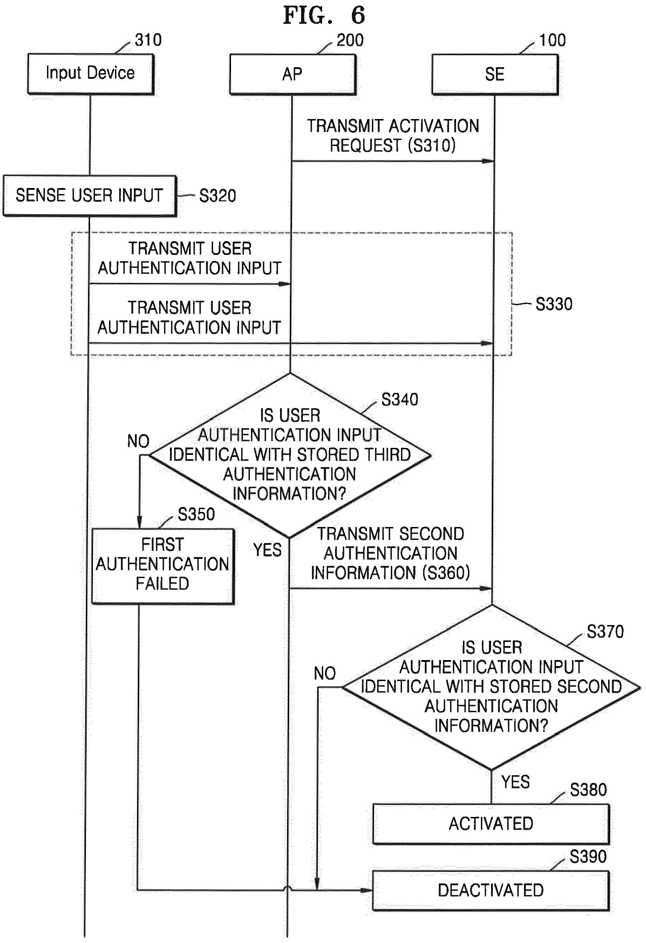

FIG. 6 is a flowchart of a method of operating an electronic device, according to an exemplary embodiment of the inventive concept. The method of FIG. 6 may be performed in the electronic device 10 of FIG. 1.

Referring to FIG. 6, in operation S310, the AP 200 may transmit an activation request to the SE 100. In operation S320, the input device 310 may sense a user input. In operation S330, a user authentication input obtained by sensing the user input may be transmitted by the input device 310 to the AP 200 and the SE 100. These steps may be similar to corresponding steps in FIGS. 4 and 5.

In operation S340, the AP 200 may compare the user authentication input with third authentication information stored therein, e.g., reference authentication information. For example, the AP 200 may determine whether the user authentication input is the same as the third authentication information. Accordingly, the AP 200 may perform a first user authentication, based on the user authentication input. For example, the third authentication information may be stored in a non-volatile memory included in the AP 200.

In operation S350, when the user authentication input is not the same as the third authentication information, the AP 200 may determine that the user authentication, e.g., the first authentication, has failed. According to an exemplary embodiment of the inventive concept, an authentication result representing failure of the first authentication may be transmitted by the AP 200 to the SE 100.

In operation S360, when the user authentication input is the same as the third authentication information, the AP 200 may transmit second authentication information to the SE 100. The AP 200 may determine that the user authentication, e.g., the first authentication, has succeeded, and the user authentication input used for the first authentication may be transmitted by the AP 200, as the second authentication information, to the SE 100.

In operation S370, in response to the second authentication information, the SE 100 may compare the user authentication input received from the input device 310 with the second authentication information. For example, the SE 100 may determine whether the user authentication input is the same as the second authentication information. Accordingly, the SE 100 may perform a second user authentication, based on the user authentication input.

In operation S380, when the user authentication input is the same as the second authentication information, the SE 100 may determine that the user authentication has succeeded, and may be activated.

In operation S390, when the user authentication input is different from the second authentication information, the SE 100 may determine that the user authentication has failed, and may be deactivated. For example, when the user authentication input is not the same as the second authentication information or no user authentication inputs are received by the SE 100, the SE 100 may determine that the user authentication has failed.

In addition, when no second authentication information is received from the AP 200 or an authentication result representing that the first authentication has failed is received, the SE 100 may determine that the user authentication has failed, and may be deactivated, in operation S390.

In the method of operating the electronic device, according to the present embodiment, the AP 200 may perform the first authentication by comparing the user authentication input received from the input device 310 with the third authentication information, e.g., the reference authentication information, stored therein. When the first authentication succeeds, the SE 100 may perform the second authentication by comparing the user authentication input used in the first authentication, e.g., the second authentication information, with the user authentication input directly received from the input device 310. Accordingly, even when a malicious program is executed in the AP 200, the malicious program manipulates a user authentication input or creates a virtual user authentication input, and the manipulated user authentication input or the virtual user authentication input is used in the first authentication, since the SE 100 performs an additional authentication based on the actual user authentication input directly received from the input device 310, the SE 100 may be prevented from being activated by the malicious program.

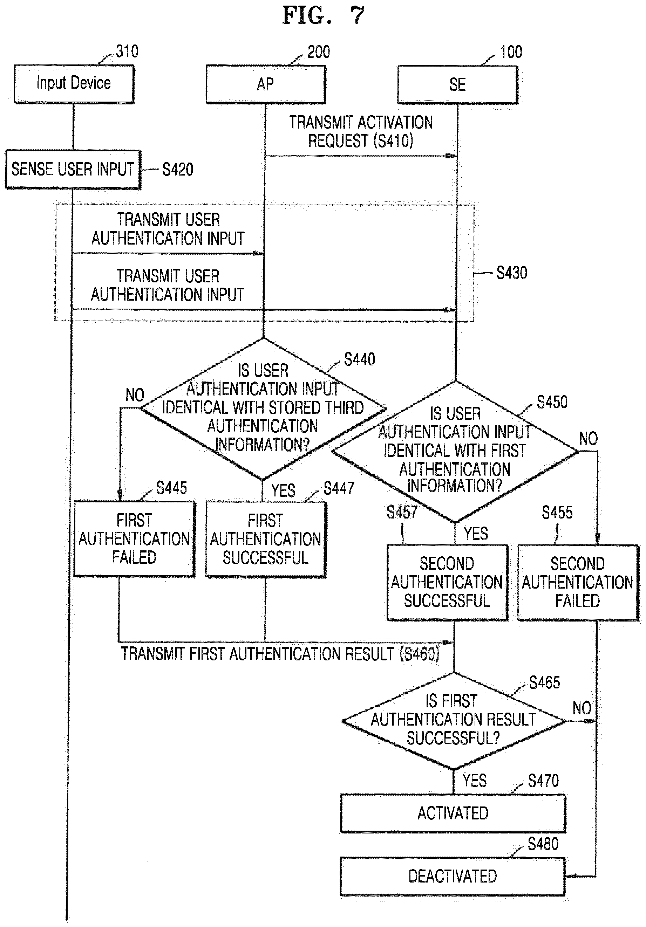

FIG. 7 is a flowchart of a method of operating an electronic device, according to an exemplary embodiment of the inventive concept. The method of FIG. 7 may be performed in the electronic device 10 of FIG. 1.

Referring to FIG. 7, in operation S410, the AP 200 may transmit an activation request to the SE 100. In operation S420, the input device 310 may sense a user input. In operation S430, a user authentication input obtained by sensing the user input may be transmitted by the input device 310 to the AP 200 and the SE 100. These steps may be similar to corresponding steps in FIGS. 4-6.

Hereinafter, each of the AP 200 and the SE 100 may perform a user authentication by comparing the user authentication input with reference authentication information stored therein.

In operation S440, the AP 200 may compare the user authentication input with third authentication information, e.g., reference authentication information, stored therein. For example, the AP 200 may determine whether the user authentication input is the same as the third authentication information. Accordingly, the AP 200 may perform a first authentication.

In operation S445, when the user authentication input is not the same as the third authentication information, the AP 200 may determine that the first authentication has failed. On the other hand, in operation S447, when the user authentication input is the same as the third authentication information, the AP 200 may determine that the first authentication has succeeded. In operation S460, the AP 200 may transmit a first authentication result to the SE 100.

In operation S450, the SE 100 may compare the user authentication input with first authentication information, e.g., reference authentication information, stored therein. For example, the SE 100 may determine whether the user authentication input is the same as the first authentication information. Accordingly, the SE 100 may perform a second authentication.

In operation S455, when the user authentication input is not the same as the first authentication information, the SE 100 may determine that the second authentication has failed. On the other hand, in operation S457, when the user authentication input is the same as the first authentication information, the SE 100 may determine that the second authentication has succeeded.

In operation S465, when the second authentication succeeds, the SE 100 may check the first authentication result received from the AP 200. In other words, the SE 100 may determine whether the first authentication result represents a success. In operation S470, when the first authentication result represents a success, the SE 100 may determine that the user authentication has succeeded, and the SE 100 may be activated. In operation S480, when a second authentication result or the first authentication result represents a failure, the SE 100 may determine that the user authentication has failed, and the SE 100 may be deactivated, or not activated at all.

In the method of operating the electronic device according to the present embodiment, each of the AP 200 and the SE 100 performs a user authentication based on the user input received from the input device 310. In addition, when both an authentication result of the AP 200 and an authentication result of the SE 100 represent a success, the SE 100 may be activated. Accordingly, the security of the user authentication for activating the SE 100 may be reinforced.

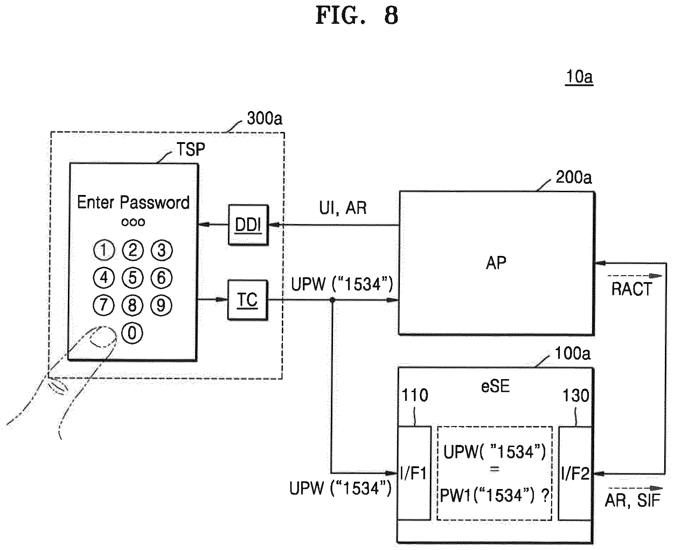

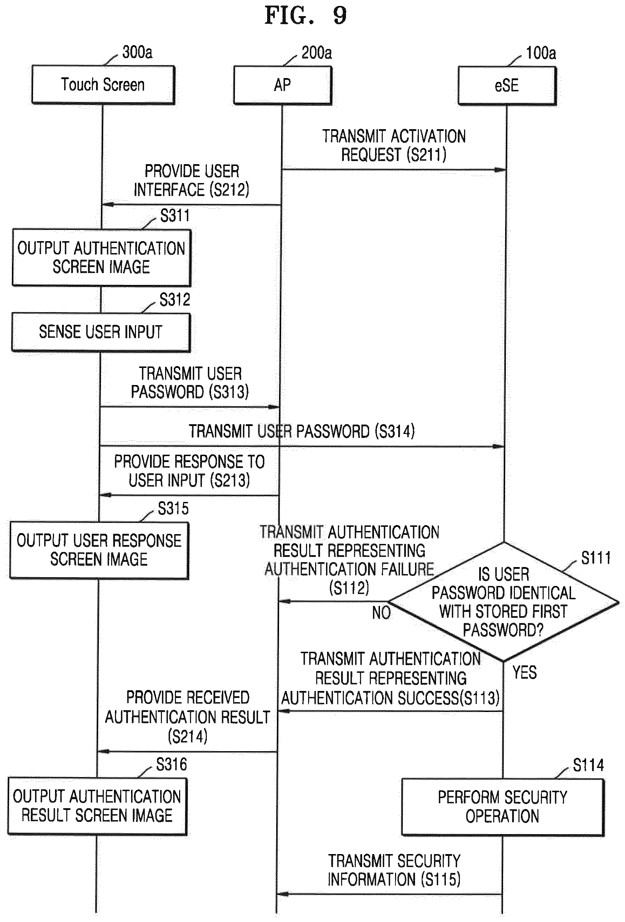

FIG. 8 is a block diagram of an electronic device 10a according to an exemplary embodiment of the inventive concept. FIG. 9 is a flowchart of an eSE activating method performed by the electronic device 10a of FIG. 8, according to an exemplary embodiment of the inventive concept.

Referring to FIGS. 8 and 9, the electronic device 10a may include an eSE 100a, an AP 200a, and a touch screen 300a. The electronic device 10a may include the touch screen 300a as an I/O device, and may include the eSE 100a as an SE. The touch screen 300a may include a touch screen panel TSP, a display driving circuit DDI, and a touch controller TC. The display driving circuit DDI and the touch controller TC may communicate with the AP 200a, and the touch controller TC may transmit a user input to the eSE 100a. The eSE 100a may receive the user input from the touch screen 300a, in other words, from the touch controller TC, via the first interface 110, and may communicate with the AP 200a via the second interface 130.

When the eSE 100a is requested to be activated, e.g., when a security operation of the eSE 100a is requested, the AP 200a may, in operation S211, transmit an activation request RACT to the eSE 100a. According to an exemplary embodiment of the inventive concept, the first interface 110 may switch from a low power mode (e.g., an idle state, a sleep state, or a power off state) to a normal operation mode in response to the activation request RACT.

In operation S212, the AP 200a may provide, to the touch screen 300a, a user interface UI for receiving a user authentication input. In operation S311, the touch screen 300a may output an authentication screen image. The display driving circuit DDI may display the user interface UI received from the AP 200a on the touch screen panel TSP.

In operation S312, when a user touches the touch screen 300a via the user interface UI, the touch screen 300a may sense a user input. The user input may be a user password UPW. The touch controller TC may obtain the user password UPW by sensing the user input, e.g., touch coordinates, on the touch screen 300a.

In operations S313 and S314, the touch screen 300a may transmit the user password UPW to the AP 200a and the eSE 100a, respectively. The user password UPW may be transmitted simultaneously to the AP 200a and the eSE 100a.

In operation S213, when the user password UPW is received, the AP 200a may provide a response to the user input to the touch screen 300a. For example, when the user input is "1534", the AP 200a may transmit, to the display driving circuit DDI, image data that represents an image in which buttons 1, 5, 3, and 4 from among number buttons displayed on the touch screen 300a are pressed. In operation S315, the touch screen 300a may output a user response screen image.

In operation S111, the eSE 100a may compare the user password UPW with a first password PW1 stored therein. Inside the eSE 100a, e.g., in a storage or other non-volatile memory, a reference password for user authentication, e.g., the first password PW1, is stored. The eSE 100a may perform a user authentication by comparing the user password UPW received from the touch screen 300a with the first password PW1.

The eSE 100a may transmit an authentication result AR to the AP 200a. When the user password UPW is not the same as the first password PW1, the eSE 100a may determine that the user authentication has failed, and in operation S112, may transmit an authentication result representing an authentication failure to the AP 200a. On the other hand, when the user password UPW is the same as the first password PW1, the eSE 100a may determine that the user authentication has succeeded, and in operation S113, may transmit an authentication result representing an authentication success to the AP 200a. For example, when the user password UPW is "1534" and the first password PW1 is "1534", the eSE 100a may determine that the user authentication has succeeded.

In operation S214, the AP 200a may provide the received authentication result AR to the touch screen 300a. For example, the AP 200a may transmit, to the display driving circuit DDI, image data that represents the authentication result AR. In operation S316, the touch screen 300a may output an authentication result screen image. The authentication result screen image will provide the user with confirmation that they have been successfully authenticated, for example.

In operation S114, when the user authentication succeeds, the eSE 100a may be activated to perform a security operation according to a request from the AP 200a. In operation S114, the eSE 100a may perform a security operation, based on the security data stored in the storage 120 of FIG. 1. In operation S115, security information SIF generated by the security operation may be transmitted by the eSE 100a to the AP 200a.

As such, in the electronic device 10a, the user password UPW may be transmitted to each of the AP 200a and the eSE 100a, and the eSE 100a may perform a user authentication for activating the eSE 100a, based on the user password UPW. The AP 200a may provide a response to the received user input, e.g., the user password UPW, to the touch screen 300a. Accordingly, the user may check an input provided by him or herself.

The eSE activating method described above with reference to FIGS. 8 and 9 corresponds to an example in which the user authentication method of FIG. 4 is applied. However, the inventive concept is not limited thereto, and the user authentication methods described above with reference to FIGS. 5-7 are applicable to the method of activating the eSE 100a of the electronic device 10a of FIG. 8. For example, the eSE 100a may perform at least one additional authentication, based on a password or an authentication result received from the AP 200a. Alternatively, the AP 200a may perform a user authentication by comparing the user password UPW received from the touch screen 300a with a reference password stored therein, and the eSE 100a may compare a password used during the user authentication by the AP 200a with the user password UPW received from the touch screen 300a.

FIGS. 8 and 9 illustrate an example in which the user password UPW is used as a user authentication input. However, various types of knowledge-based authentication information, such as a touch pattern, a personal identification number (PIN), and character data, may be used as the user authentication input.

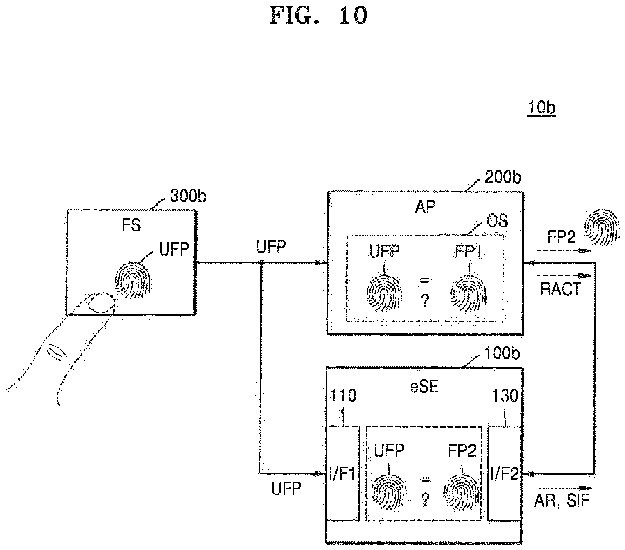

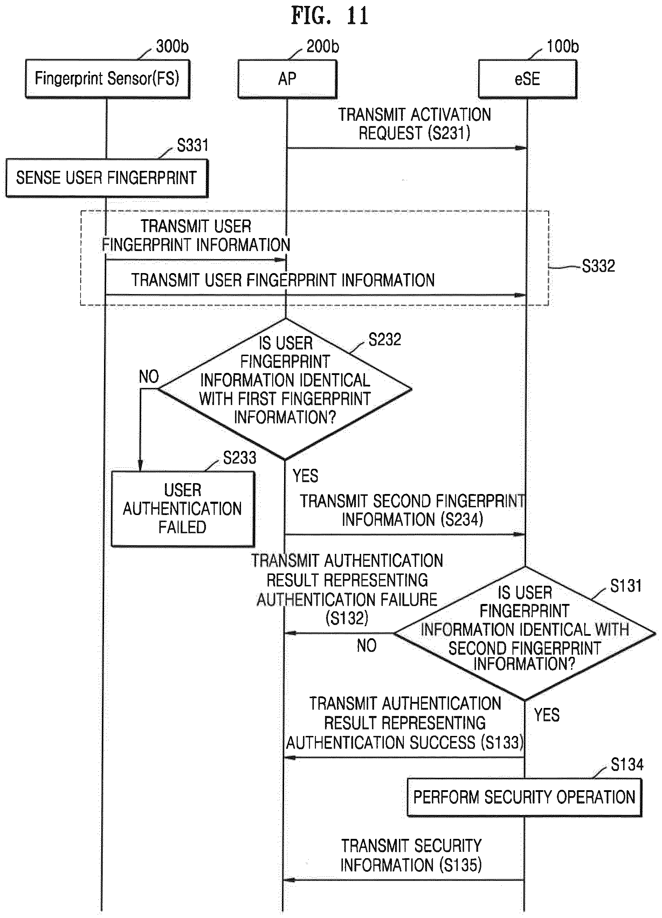

FIG. 10 is a block diagram of an electronic device 10b according to an exemplary embodiment of the inventive concept. FIG. 11 is a flowchart of an eSE activating method of the electronic device 10b of FIG. 10, according to an exemplary embodiment of the inventive concept.

Referring to FIGS. 10 and 11, the electronic device 10b may include an eSE 100b, an AP 200b, and a fingerprint sensor (FS) 300b. The electronic device 10b may include the FS 300b as an input device. The electronic device 10b may further include an output device that outputs a response to a user input or outputs a user authentication result. The eSE 100b may receive a user input from the FS 300b via the first interface 110, and may communicate with the AP 200b via the second interface 130.

In operation S231, when a security operation of the eSE 100b is requested, the AP 200b may transmit an activation request RACT to the eSE 100b. When the eSE 100b receives the activation request RACT from the AP 200b, the eSE 100b may recognize that a user input is to be received from the FS 300b. According to an exemplary embodiment of the inventive concept, the first interface 110 may switch from a low power mode (e.g., an idle state, a sleep state, or a power off state) to a normal operation mode in response to the activation request RACT.

In operation S331, when a user touches the FS 300b with his or her finger to perform user authentication, the FS 300b may sense the user's fingerprint. The FS 300b may obtain user fingerprint information UFP.

In operation S332, the FS 300b may transmit the obtained user fingerprint information UFP to the AP 200b and the eSE 100b, respectively. The user fingerprint information UFP may be transmitted simultaneously to the AP 200b and the eSE 100b.

In operation S232, the AP 200b may compare the user fingerprint information UFP with first fingerprint information FP1, e.g., reference fingerprint information, stored therein. Accordingly, the AP 200b may perform a first authentication. Non-volatile memory included in the AP 200b stores the reference fingerprint information for user authentication, e.g., the first fingerprint information FP1. An OS of the AP 200b may compare the first fingerprint information FP1 previously stored in the AP 200b with the user fingerprint information UFP received from the FS 300b, and may determine whether the first fingerprint information FP1 matches the user fingerprint information UFP. For example, by using an image comparison technique, the OS may determine whether the first fingerprint information FP1 matches the user fingerprint information UFP.

In operation S233, when the user fingerprint information UFP does not match the first fingerprint information FP1, the AP 200b may determine that user authentication has failed. On the other hand, in operation S234, when the user fingerprint information UFP matches the first fingerprint information FP1, the AP 200b may transmit, as second fingerprint information FP2, the user fingerprint information UFP to the eSE 100b.

In operation S131, the eSE 100b may receive the second fingerprint information FP2 from the AP 200b, and may compare the second fingerprint information FP2 with the user fingerprint information UFP received from the FS 300b. The eSE 100b may determine whether the second fingerprint information FP2 matches the user fingerprint information UFP. Accordingly, the eSE 100b may perform a second authentication.

The eSE 100b may transmit an authentication result AR to the AP 200b. In operation S132, when the user fingerprint information UFP does not match the second fingerprint information FP2, the eSE 100b may determine that the user authentication has failed, and may transmit an authentication result AR representing an authentication failure to the AP 200b. According to an exemplary embodiment of the inventive concept, when the second fingerprint information FP2 has been received from the AP 200b but the user fingerprint information UFP has not been received from the FS 300b, the eSE 100b may also determine that the user authentication has failed.

On the other hand, in operation S133, when the user fingerprint information UFP matches the second fingerprint information FP2, the eSE 100b may determine that the user authentication has succeeded, and may transmit an authentication result AR representing an authentication success to the AP 200b. According to an exemplary embodiment of the inventive concept, the AP 200b may provide a user authentication result to the output device.

In operation S134, when the user authentication succeeds, the eSE 100b may be activated and may perform a security operation according to a request from the AP 200b. The eSE 100b may perform a security operation, based on the security data stored in the storage 120 of FIG. 1, and in operation S135, may transmit security information SIF generated by the security operation to the AP 200b.

As such, in the electronic device 10b, the user fingerprint information UFP may be transmitted to each of the AP 200b and the eSE 100b. The AP 200b may perform a first authentication by comparing the user fingerprint information UFP with the reference fingerprint information stored therein, and the eSE 100b may perform a second authentication by comparing the fingerprint information used during the first authentication with the user fingerprint information UFP.

The method of activating the eSE 100b, which has been described above with reference to FIGS. 10 and 11, corresponds to an example in which the user authentication method of FIG. 6 is applied. However, the inventive concept is not limited thereto, and the user authentication methods described above with reference to FIGS. 4, 5, and 7 are applicable to the method of activating the eSE 100b of the electronic device 10b of FIG. 10. For example, the eSE 100b may compare the received user fingerprint information UFP with the reference fingerprint information stored therein. When the user fingerprint information UFP matches the reference fingerprint information stored in the eSE 100b, the eSE 100b may also receive fingerprint information from the AP 200b and compare the user fingerprint information UFP with the fingerprint information received from the AP 200b. Alternatively, each of the AP 200b and the eSE 100b may perform a user authentication by comparing the user fingerprint information UFP with the reference fingerprint information stored therein. Thus, whether the eSE 100b is to be activated may be determined based on a result of the user authentication performed by the AP 200b and a result of the user authentication performed by the eSE 100b.

FIGS. 10 and 11 illustrate an example in which the user fingerprint information UFP is used as a user authentication input. However, various types of bio-based authentication information, such as iris information, retina information, vein information, facial information, and voice information, may be used as a user authentication input.

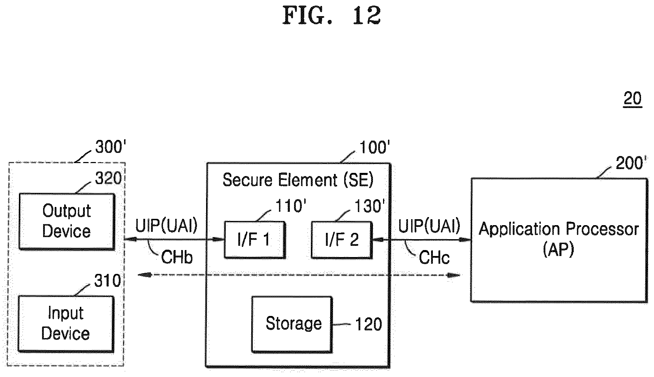

FIG. 12 is a block diagram of an electronic device 20 according to an exemplary embodiment of the inventive concept.

Referring to FIG. 12, the electronic device 20 may include an AP 200', an SE 100', and an I/O device 300'. The I/O device 300' may include an input device 310 and an output device 320. The electronic device 20 may further include other components, such as memory and a network module.

According to the present embodiment, no direct physical channels exist between the I/O device 300' and the AP 200'. Instead, the I/O device 300' and the AP 200' may communicate with each other via the SE 100'. For example, the SE 100' may operate as a repeater.

The SE 100' may include a first interface 110', a storage 120, and a second interface 130'. The SE 100' may communicate with the I/O device 300' via the first interface 110' and may communicate with the AP 200' via the second interface 130'.

The first interface 110' may receive a user input UIP from the input device 310 via a channel CHb. The second interface 130' may transmit the user input UIP to the AP 200' via a channel CHc. The second interface 130' may also receive a response corresponding to the user input UIP from the AP 200' via the channel CHc, and the first interface 110' may transmit the response to the output device 320.

When the SE 100' receives an activation request from the AP 200', the SE 100' may perform a user authentication, based on a user authentication input UAI included in the user input UIP, and may be activated when the user authentication succeeds. The SE 100' may also transmit the user authentication input UAI to the AP 200' via the second interface 130'.

The user authentication methods described above with reference to FIGS. 4 and 7 are applicable to the electronic device 20 of FIG. 12. The SE 100' may perform a user authentication, based on the user authentication input UAI, and may be activated when the user authentication succeeds. The SE 100' being activated may mean that the SE 100' is authorized to perform a security operation requested by the AP 200' based on the security data stored in the storage 120. The SE 100' being activated may mean that the storage 120 is accessible.

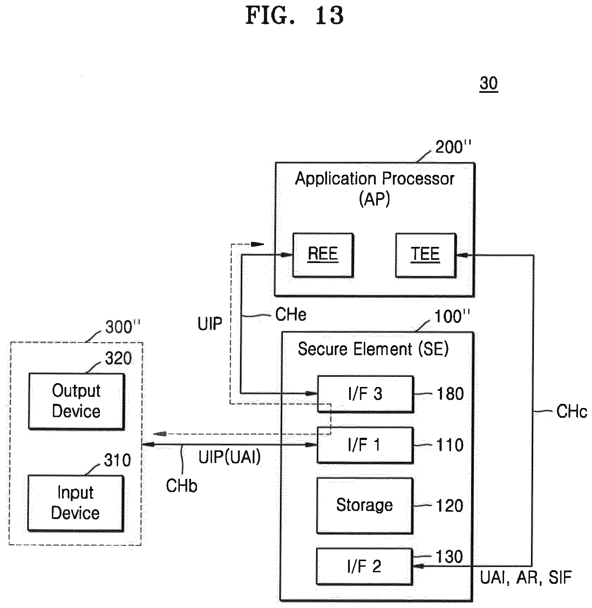

FIG. 13 is a block diagram of an electronic device 30 according to an exemplary embodiment of the inventive concept.

Referring to FIG. 13, the electronic device 30 may include an AP 200", an SE 100", and an I/O device 300". The I/O device 300" may include an input device 310 and an output device 320. The electronic device 30 may further include other components, such as memory and a network module.

According to the present embodiment, no direct physical channels exist between the I/O device 300" and the AP 200". Instead, the I/O device 300" and the AP 200" may communicate with each other via the SE 100". For example, the SE 100" may operate as a repeater.

The SE 100" may include a first interface 110, a storage 120, a second interface 130, and a third interface 180. The SE 100" may communicate with the I/O device 300" via the first interface 110. When the SE 100" receives a user input UIP related to a normal operation, e.g., an operation that does not require security, the SE 100" may transmit the user input UIP to the AP 200" via the third interface 180 and may receive a response to the user input UIP from the AP 200". When the SE 100" receives a user input UIP related to an operation requiring security, e.g., a user authentication input UAI, the SE 100" may transmit the user authentication input UAI to the AP 200" via the second interface 130. In this case, the SE 100" may transmit or receive various types of information related to a security operation or a processing result to or from the AP 200" via the second interface 130.

The first interface 110 may be connected to the I/O device 300" via a channel CHb, the third interface 180 may be connected to the AP 200" via a channel CHe, and the second interface 130 may be connected to the AP 200" via a channel CHc.

According to an exemplary embodiment of the inventive concept, the AP 200" may include a rich execution environment (REE) and a trusted execution environment (TEE). The AP 200" may process, via the TEE, data that requires a relatively high security level. The REE and the TEE may be physically separated from each other, separated from each other by software, or both physically separated from each other and separated from each other by software. The REE may be connected, via the channel CHe, to the third interface 180 of the SE 100", and the TEE may be connected, via the channel CHc, to the second interface 130 of the SE 100".

When the SE 100" receives an activation request from the AP 200", the SE 100" may receive the user authentication input UAI included in the user input UIP and transmit the user authentication input UAI to the TEE of the AP 200" via the second interface 130.

The SE 100" may be activated based on the user authentication input UAI. The user authentication methods described above with reference to FIGS. 4 and 7 are applicable to the electronic device 30 of FIG. 13. The SE 100" may perform a user authentication, based on the user authentication input UAI, and may be activated when the user authentication succeeds. The SE 100" being activated may mean that the SE 100" is able to perform a security operation requested by the AP 200" based on the security data stored in the storage 120. In this case, the contents of the storage 120 may be accessible or utilized.

The SE 100" may transmit an authentication result AR to the TEE of the AP 200" via the second interface 130. When the SE 100" is activated due to a success in a user authentication, the SE 100" may transmit, via the second interface 130, security information SIF generated according to a security operation to the TEE of the AP 200".

As described above with reference to FIGS. 12 and 13, the SEs 100' and 100" may operate as repeaters that assist in communications between the I/O devices 300' and 300" and the APs 200' and 200". Thus, when the SEs 100' and 100" receive the activation requests from the APs 200' and 200", respectively, the SEs 100' and 100" may perform user authentications for activation based on the user authentication inputs UAI received from the input device 310.

In FIGS. 12 and 13, the output device 320 communicates with the SEs 100' and 100" via the same channel as that used by the input device 310, in other words, via the channel CHb. However, the inventive concept is not limited thereto, and the output device 320 may communicate with the SEs 100' and 100" via a channel different from that used by the input device 310, or may directly communicate with the AP 200' and the AP 200".

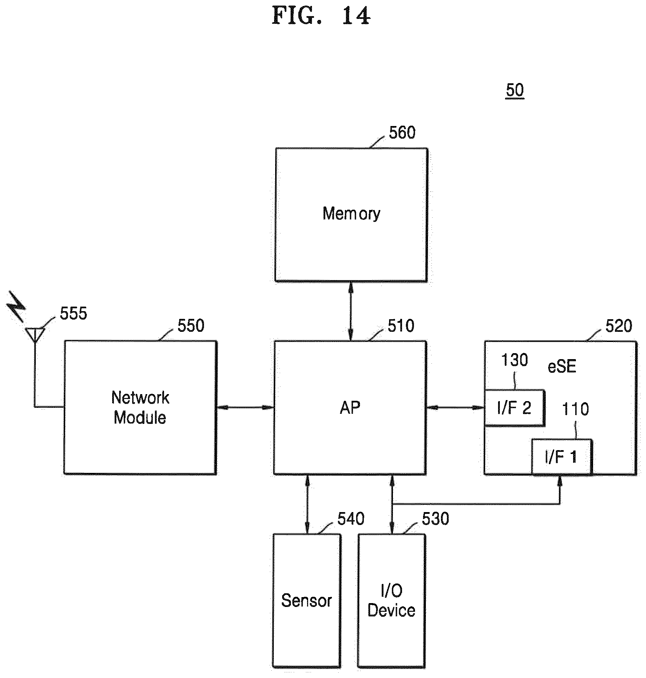

FIG. 14 is a block diagram of a mobile terminal 50 according to an exemplary embodiment of the inventive concept.

Referring to FIG. 14, the mobile terminal 50 may include an AP 510, an eSE 520, an I/O device 530, a network module 550, a sensor 540, and a memory 560.

The AP 510 may control an overall operation of the mobile terminal 50. The AP 510 may communicate with other components of the mobile terminal 50, and may control operations of the other components. According to an exemplary embodiment of the inventive concept, the AP 510 may include a single core processor or a multi-core processor. According to an exemplary embodiment of the inventive concept, the AP 510 may further include an internal or external cache memory.

The eSE 520 may store security data safely and may be activated according to a request from the AP 510 to perform a security operation. For example, the eSE 520 may store security data, such as an ID, a password, and a bank account number necessary for electronic payment and a server login. For example, the eSE 520 may provide, to the AP 510, the security data stored according to a request from the AP 510 or security information associated with the security data.

The eSE 520 may receive a user authentication input directly from the I/O device 530 via the first interface 110, and may perform a user authentication based on the user authentication input. When the user authentication succeeds, the eSE 520 may be activated to perform a security operation according to the request from the AP 510. The eSE 520 may communicate with the AP 510 via the second interface 130. For example, the eSE 520 may receive an activation request from the AP 510 via the second interface 130, and may transmit or receive security information generated by performing a security operation, in other words, security information based on security data stored therein, to or from the AP 510.

The I/O device 530 may include an input device such as a touch pad, a keypad, or an input button, and an output device such as a display or a speaker. The I/O device 530 may include a bio-sensor that senses biometric information.

The sensor 540 may sense an internal or external environment of the mobile terminal 50, and may be any of a variety of sensors, such as an illuminance sensor, an image sensor, an acoustic sensor, an acceleration sensor, a temperature sensor, or an infrared sensor. According to an exemplary embodiment of the inventive concept, the sensor 540 may operate as an input device.

The network module 550 may communicate with an external device. For example, the network module 550 may be a modem communication interface connectable to a wired local area network (LAN), a wireless short-range communication interface (e.g., Bluetooth, Wireless Fidelity (Wi-Fi), or Zigbee), a power line communication (PLC), or a mobile cellular network (3rd Generation (3G), or Long Term Evolution (LTE)).

The memory 560 may store a control command code, control data, or user data for controlling the mobile terminal 50. The memory 560 may include at least one of volatile memory and non-volatile memory.

The mobile terminal 50 may have a battery embedded therein or further include a power supplier that receives power from an external source, e.g., to provide internal power. The mobile terminal 50 may further include a storage. The storage may be a non-volatile medium, such as a hard disk drive (HDD), a Solid State Disk (SSD), an embedded Multi Media Card (eMMC), or a Universal Flash Storage (UFS). The storage may store information about a user received via the I/O device 530 and pieces of sensing information collected via the sensor 540.

In the mobile terminal 50, the eSE 520 may receive a user authentication input directly from the I/O device 530, and may perform a user authentication (e.g., local-level authentication) for activating the eSE 520, based on the user authentication input. The eSE 520 may be activated when the user authentication succeeds, and may provide security data stored therein or security information based on the security data to the AP 510. The AP 510 may transmit the security information (or processing information based on the security information) to an external device, e.g., an external server, via the network module 550, and thus, may perform user authentication (e.g., server-level authentication) for accessing the external server or requesting the external server to perform a predetermined operation. The network module 550 may wirelessly transmit the request to the external server via an antenna 555.

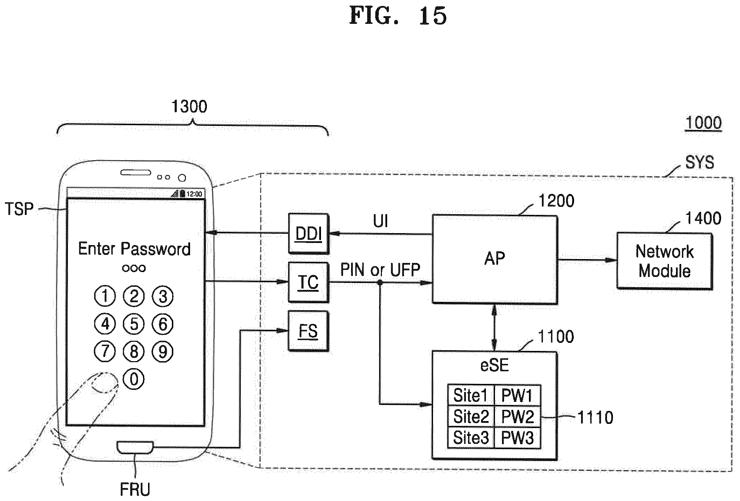

FIG. 15 is a block diagram of an operation of a mobile terminal including an eSE, according to an exemplary embodiment of the inventive concept.

Referring to FIG. 15, a mobile terminal 1000 may include an eSE 1100, an AP 1200, an I/O device 1300, and a network module 1400. The I/O device 1300 may include a touch screen panel TSP, a fingerprint reader FRU, a display driving circuit DDI, a touch controller TC, and a fingerprint sensor FS. According to an exemplary embodiment of the inventive concept, the fingerprint reader FRU may be a part of the touch screen panel TSP. The eSE 1100, the AP 1200, the network module 1400, the display driving circuit DDI, the touch controller TC, and the fingerprint sensor FS may be included in an internal system SYS of the mobile terminal 1000.

FIG. 15 illustrates a case in which a storage 1110 of the eSE 1100 stores respective user passwords (PW1-PW3) for a plurality of Internet sites (Site1-Site3) as security data, and, to access a specific Internet site, the AP 1200 requests the eSE 1100 to provide a user password for that site.

The AP 1200 may transmit an activation request to the eSE 1100. The activation request may include a request for providing a user password for a specific Internet site. Thereafter, user authentication for activating the eSE 1100, e.g., local-level authentication, may be performed.

The AP 1200 may provide a user interface UI to the display driving circuit DDI, and the display driving circuit DDI may display the user interface UI on the touch screen panel TSP. The user may input a PIN via the touch screen panel TSP. A user may input a user authentication input, such as a password or a touch pattern, via the touch screen panel TSP. The touch controller TC may obtain a PIN via the touch screen panel TSP, and may transmit the PIN as a user authentication input to the AP 1200 and the eSE 1100.

The user may also input user fingerprint information UFP via the fingerprint reader FRU. The fingerprint sensor FS may transmit the user fingerprint information UFP as a user authentication input to the AP 1200 and the eSE 1100. In addition, depending on the type of the I/O device 1300, various types of knowledge-based authentication information and bio-based authentication information may be transmitted as a user authentication input to the AP 1200 and the eSE 1100. The I/O device 1300 type may depend on the type of a sensor or input device included in the I/O device 1300, for example.

The eSE 1100 may perform a user authentication, based on a user authentication input, e.g., the PIN and/or the user fingerprint information UFP. For example, the eSE 1100 may compare the received PIN with an ID number previously stored therein. Alternatively, the eSE 1100 may perform a user authentication by comparing the received user fingerprint information UFP with fingerprint information stored therein or fingerprint information received from the AP 1200. The user authentication based on the PIN and the user authentication based on the user fingerprint information UFP may be performed simultaneously or at different times.

When the user authentication succeeds, the eSE 1100 may be activated and use the security data stored in the storage 1110. The eSE 1100 may provide the AP 1200 with a password for an Internet site requested by the AP 1200.

The AP 1200 may provide the password received from the eSE 1100 to an external Internet site via the network module 1400, to thereby perform a user authentication, e.g., server-level authentication, and access the Internet site.

As such, the mobile terminal 1000 may store passwords for user authentication with respect to external Internet sites, e.g., server-level authentication, in the eSE 1100, and may receive a user authentication input for user authentication with respect to the eSE 1100, e.g., local-level authentication, from an input device. In the mobile terminal 1000, the eSE 1100 may receive a user authentication input directly from the I/O device 1300 and may perform user authentication for activation, based on the received user authentication input.

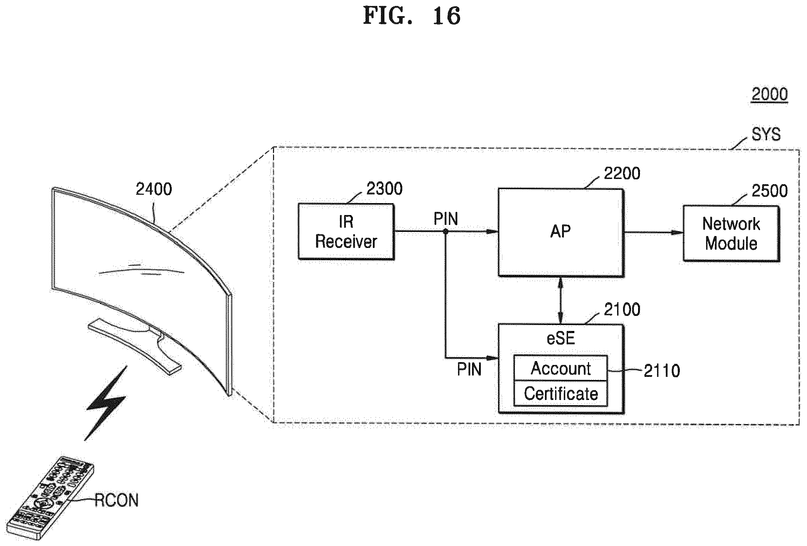

FIG. 16 is a schematic diagram of an operation of a smart television (TV) including an eSE, according to an exemplary embodiment of the inventive concept.

Referring to FIG. 16, a smart TV 2000 may include an eSE 2100, an AP 2200, an IR receiver 2300, a screen 2400, and a network module 2500. The eSE 2100, the AP 2200, the IR receiver 2300, and the network module 2500 may be included in an internal system SYS of the smart TV 2000.

The AP 2200 may transmit or receive payment-related information to or from an external payment server via the network module 2500. To generate the payment-related information, the AP 2200 may use security data stored in the eSE 2100. The AP 2200 may send a request for activation to the eSE 2100, and may provide a user interface UI for user authentication to the screen 2400 to achieve user authentication for activating the eSE 2100.

When a user inputs a user authentication input, e.g., a PIN, to a remote controller RCON, the IR receiver 2300 may receive the PIN from the remote controller RCON.

The IR receiver 2300 may transmit the PIN to the AP 2200 and the eSE 2100. According to an exemplary embodiment of the inventive concept, the eSE 2100 may receive the PIN by monitoring communication between the AP 2200 and the IR receiver 2300 in response to a request for activation from the AP 2200.

The eSE 2100 may perform a user authentication, based on the PIN. For example, the eSE 2100 may perform a user authentication by comparing the PIN with an ID number stored therein.

According to an exemplary embodiment of the inventive concept, a storage 2110 of the eSE 2100 may store user account information (including, e.g., nickname information) and an authentication certificate, and, when user authentication succeeds, the eSE 2100 may transmit the user account information and the authentication certificate to the AP 2200. The AP 2200 may encrypt the user account information and the authentication certificate and may transmit encrypted payment-related information to the external payment server via the network module 2500.

As such, the smart TV 2000 may transmit or receive payment-related information for a financial transaction, such as a payment for products purchased by the user or an account transfer, to or from the external payment server. Data requiring high security, such as bank account information, card information, and an authentication certificate used for payment, may be stored in the eSE 2100, and the eSE 2100 may be activated in response to a request from the AP 2200, and thus, the stored data may be used. However, to activate the eSE 2100, a user authentication must be performed. In this case, the eSE 2100 may receive a user input, in other words, a PIN, directly from the IR receiver 2300 and may perform the user authentication. Therefore, the security of the user authentication process may be reinforced. Accordingly, the user may process financial transactions safely and quickly by using the bank account information, the card information, and the authentication certificate stored in the eSE 2100.

While the inventive concept has been particularly shown and described with reference to exemplary embodiments thereof, it will be understood by those of ordinary skill in the art that various changes in form and details may be made therein without departing from the scope of the inventive concept as defined by the appended claims.

## Claims

1. A secure element (SE), comprising:
a storage (120; 1110; 2110) configured to store security data;
a first interface (110; 110') configured to receive a user input (UAI; UPW; UFP; PIN) from an external input device (310);
a processor (140) configured to perform a user authentication, based on the user input (UAI; UPW; UFP; PIN), and activate the storage (120; 1110; 2110) when the user authentication succeeds; and
a second interface (130; 130') configured to transmit security information (SIF) based on the security data to an external processor (200; 200a; 200b; 200'; 200"; 510; 1200; 2200),
the second interface (130; 130') is configured to receive a second authentication information from the external processor (200; 200a; 200b; 200'; 200"; 510; 1200; 2200), and
the processor (140) compares the user input (UAI; UPW; UFP; PIN) with first authentication information stored in the secure element (100; 100a; 100b; 100'; 100"; 520; 1100; 2100) and the second authentication information, and, when it is determined that the user input (UAI; UPW; UFP; PIN) is the same as the first authentication information and the second authentication information respectively, the processor (140) determines that the user authentication has succeeded.

2. The secure element of claim 1, wherein access to the first interface (110; 110') by the external processor (200; 200a; 200b; 200'; 200"; 510; 1200; 2200) is restricted.

3. The secure element of claim 1 or 2, wherein, when the second authentication information is received, the processor (140) determines whether the user input (UAI; UPW; UFP; PIN) has been received, and
when it is determined that the user input (UAI; UPW; UFP; PIN) has not been received, the processor (140) determines that the user authentication has failed.

4. The secure element of any one of claims 1 to 3, wherein, when the user input (UAI; UPW; UFP; PIN) is the same as first authentication information stored in the secure element (100; 100a; 100b; 100'; 100"; 520; 1100; 2100), and an authentication result representing an authentication success is received from the external processor (200), the processor (140) determines that the user authentication has succeeded.

5. The secure element of any one of claims 1 to 4, wherein the security information comprises the security data, a result of a calculation performed based on the security data, or encrypted data generated by encryption of the security data.

6. The secure element of any one of claims 1 to 5, wherein the first interface (110; 110') receives the user input from the external processor (200; 200a; 200b; 200'; 200"; 510; 1200; 2200) in response to a user input reception request received from the external processor (200; 200a; 200b; 200'; 200"; 510; 1200; 2200) via the second interface (130; 130').

7. The secure element of any one of claims 1 to 6, wherein the first interface (110) receives the user input (UAI; UPW; UFP; PIN) by monitoring a data exchange between the external input device (310) and the external processor (200; 200a; 200b; 510; 1200; 2200).

8. The secure element of any one of claims 1 to 7, wherein the second interface (130') transmits the user input (UAI) received via the first interface (110') to the external processor (200').

9. The secure element of any one of claims 1 to 8, further comprising a third interface (180) configured to transmit the user input (UAI) to the external processor (200").

10. The secure element of any one of claims 1 to 9, wherein
the user input (UAI; UPW; UFP; PIN) comprises knowledge-based authentication information or bio-based authentication information,
the knowledge-based authentication information comprises a motion pattern, a voice pattern, a touch pattern, a password, image data, or character data, and
the bio-based authentication information comprises fingerprint information, iris information, retina information, vein information, facial information, or voice information.

11. A method of operating a secure element (SE), the method comprising:
receiving a user authentication input from an input device (310);
determining activation or deactivation of a storage (120; 1110; 2110) that stores security data, based on the user authentication input; and
transmitting security information based on the security data to an external processor (200; 200a; 200b; 200'; 200"; 510; 1200; 2200) when the storage (120; 1110; 2110) is activated, receiving second authentication information from the external processor (200; 200a; 200b; 200'; 200"; 510; 1200; 2200),
wherein the determining of the activation or deactivation comprises comparing the user authentication input with first authentication information stored in the secure element (100) and the second authentication information, and determining that the storage (120) is to be activated if the user authentication input matches the first authentication information and the second authentication information, respectively.

12. The method of claim 11, wherein the secure element (100; 100a; 100b; 100"; 520; 1100; 2100) receives the user authentication input from the input device (310) via a first interface (110) and the secure element (100; 100a; 100b; 100"; 520; 1100; 2100) receives the second authentication information from the external processor (200; 200a; 200b; 200"; 510; 1200; 2200) and transmits the security information (SIF) to the external processor (200; 200a; 200b; 200"; 510; 1200; 2200) via a second interface (130).

13. An electronic device, comprising:
an input device (310) configured to sense a user input (UAI; UPW; UFP; PIN);
a secure element (100; 100a; 100b; 100'; 100"; 520; 1100; 2100) configured to receive the user input (UAI; UPW; UFP; PIN) from the input device (310) and determine, based on the user input (UAI; UPW; UFP; PIN), whether to perform a security operation; and
an application processor (200; 200a; 200b; 200'; 200"; 510; 1200; 2200) configured to exchange security information with the secure element when the secure element (100; 100a; 100b; 100'; 100"; 520; 1100; 2100) executes the security operation,
wherein the input device (310) transmits the user input to the secure element (100; 100a; 100b; 1100; 2100),
wherein the security element (100; 100a; 100b; 100'; 100"; 520; 1100; 2100) comprises
a storage (120) configured to store security data,
a first interface circuit (110; 110') configured to receive the user input (UAI; UPW; UFP; PIN) from the input device (310), and
a second interface circuit (130; 130') configured to exchange the security information with the application processor (200; 200a; 200b; 200'; 200"; 510; 1200; 2200), wherein the security information is based on the security data,
the input device (310) transmits the user input to the application processor (200; 200a, 200b; 1200; 2200),
the second interface (130; 130') is configured to receive a second authentication information from the application processor (200; 200a; 200b; 200'; 200"; 510; 1200; 2200), and
the secure element comprises a processor (140) that is configured to compare the user input (UAI; UPW; UFP; PIN) with a first authentication information stored in the secure element (100; 100a; 100b; 100'; 100"; 520; 1100; 2100) and the second authentication information, and, when it is determined that the user input (UAI; UPW; UFP; PIN) is the same as the first authentication information and the second authentication information respectively, the processor (140) determines that the user authentication has succeeded.

14. The electronic device of claim 13, wherein the application processor receives the user input from the input device (310), performs a user authentication by comparing the received user input with third authentication information stored in the application processor (200; 200a; 200b; 200'; 200"; 510; 1200; 2200), and, when the user authentication succeeds, transmits the user input as the second authentication information to the secure element (100; 100a; 100b; 100'; 100"; 520; 1100; 2100).

15. The electronic device of any one of claims 13 to 14, further comprising:
a first channel (CHa) configured to electrically connect the input device (310) to the application processor (200);
a second channel (CHb) configured to electrically connect the input device (310) to the secure element; and
a third channel (CHc) configured to electrically connect the application processor (200) to the secure element (100).

16. The electronic device of any one of claims 13 to 15, wherein the secure element (100'; 100") transmits the user input to the application processor (200'; 200").

17. The electronic device of any one of claims 13 to 16, wherein the input device (310) comprises a touch pad, a touch screen, a bio-information sensor, or a voice recognition device.

## Patentansprüche

1. Sicheres Element (SE), aufweisend:
einen Speicher (120; 1110; 2110), der so konfiguriert ist, dass er Sicherheitsdaten speichert;
eine erste Schnittstelle (110; 110'), die so konfiguriert ist, dass sie eine Benutzereingabe (UAI; UPW; UFP; PIN) von einer externen Eingabevorrichtung (310) empfängt;
einen Prozessor (140), der so konfiguriert ist, dass er auf Basis der Benutzereingabe (UAI; UPW; UFP; PIN) eine Benutzerauthentifizierung durchführt und den Speicher (120; 1110; 2110) aktiviert, wenn die Benutzerauthentifizierung erfolgreich ist; und
eine zweite Schnittstelle (130; 130'), die so konfiguriert ist, dass sie Sicherheitsinformationen (SIF) auf Basis der Sicherheitsdaten an einen externen Prozessor (200; 200a; 200b; 200'; 200"; 510; 1200; 2200) überträgt,
wobei die zweite Schnittstelle (130; 130') so konfiguriert ist, dass sie zweite Authentifizierungsinformationen von dem externen Prozessor (200; 200a; 200b; 200'; 200"; 510; 1200; 2200) empfängt, und
wobei der Prozessor (140) die Benutzereingabe (UAI; UPW; UFP; PIN) mit ersten Authentifizierungsinformationen, die in dem sicheren Element (100; 100a; 100b; 100'; 100"; 520; 1100; 2100) gespeichert sind, und zweiten Authentifizierungsinformationen vergleicht, und, wenn festgestellt wird, dass die Benutzereingabe (UAI; UPW; UFP; PIN) dieselbe ist wie die ersten Authentifizierungsinformationen bzw. die zweiten Authentifizierungsinformationen, der Prozessor (140) feststellt, dass die Benutzerauthentifizierung erfolgreich war.

2. Sicheres Element nach Anspruch 1, wobei der Zugang zu der ersten Schnittstelle (110; 110') durch den externen Prozessor (200; 200a; 200b; 200'; 200"; 510; 1200; 2200) beschränkt ist.

3. Sicheres Element nach Anspruch 1 oder 2, wobei, wenn die zweiten Authentifizierungsinformationen empfangen werden, der Prozessor (140) feststellt, ob die Benutzereingabe (UAI; UPW; UFP; PIN) empfangen wurde, und
wenn festgestellt wird, dass die Benutzereingabe (UAI; UPW; UFP; PIN) nicht empfangen wurde, der Prozessor (140) feststellt, dass die Benutzerauthentifizierung gescheitert ist.

4. Sicheres Element nach einem der Ansprüche 1 bis 3, wobei, wenn die Benutzereingabe (UAI; UPW; UFP; PIN) dieselbe ist wie die ersten Authentifizierungsinformationen, die in dem sicheren Element (100; 100a; 100b; 100'; 100"; 520; 1100; 2100) gespeichert sind, und ein Authentifizierungsergebnis, das einen Authentifizierungserfolg darstellt, von dem externen Prozessor (200) empfangen wird, der Prozessor (140) feststellt, dass die Benutzerauthentifizierung erfolgreich war.

5. Sicheres Element nach einem der Ansprüche 1 bis 4, wobei die Sicherheitsinformationen die Sicherheitsdaten, ein Ergebnis einer Berechnung, die auf Basis der Sicherheitsdaten durchgeführt wurde, oder verschlüsselte Daten, die durch Verschlüsselung der Sicherheitsdaten erzeugt wurden, aufweist.

6. Sicheres Element nach einem der Ansprüche 1 bis 5, wobei die erste Schnittstelle (110; 110') die Benutzereingabe von dem externen Prozessor (200; 200a; 200b; 200'; 200"; 510; 1200; 2200) als Reaktion auf eine Benutzereingabe-Empfangsanfrage empfängt, die von dem externen Prozessor (200; 200a; 200b; 200'; 200"; 510; 1200; 2200) über die zweite Schnittstelle (130; 130') empfangen wurde.

7. Sicheres Element nach einem der Ansprüche 1 bis 6, wobei die erste Schnittstelle (110) die Benutzereingabe (UAI; UPW; UFP; PIN) durch Überwachen eines Datenaustausches zwischen der externen Eingabevorrichtung (310) und dem externen Prozessor (200; 200a; 200b; 510; 1200; 2200) empfängt.

8. Sicheres Element nach einem der Ansprüche 1 bis 7, wobei die zweite Schnittstelle (130') die Benutzereingabe (UAI), die über die erste Schnittstelle (110') empfangen wurde, an den externen Prozessor (200') überträgt.

9. Sicheres Element nach einem der Ansprüche 1 bis 8, ferner aufweisend eine dritte Schnittstelle (180), die so konfiguriert ist, dass sie die Benutzereingabe (UAI) an den externen Prozessor (200") überträgt.

10. Sicheres Element nach einem der Ansprüche 1 bis 9, wobei die Benutzereingabe (UAI; UPW; UFP; PIN) wissensbasierte Authentifizierungsinformationen oder biobasierte Authentifizierungsinformationen aufweist,
die wissensbasierten Authentifizierungsinformationen ein Bewegungsmuster, ein Stimmmuster, ein Berührungsmuster, ein Passwort, Bilddaten oder Zeichendaten aufweisen, und
die biobasierten Authentifizierungsinformationen Fingerabdruckinformationen, Irisinformationen, Netzhauinformation, Aderinformationen, Gesichtsinformationen oder Stimminformationen aufweisen.

11. Verfahren zum Betreiben eines sicheren Elements (SE), wobei das Verfahren aufweist:
Empfangen einer Benutzerauthentifizierungseingabe von einer Eingabevorrichtung (310);
Feststellen einer Aktivierung oder Deaktivierung eines Speichers (120; 1110; 2110), der Sicherheitsdaten speichert, auf Basis der Benutzerauthentifizierungseingabe; und
Übertragen von Sicherheitsinformationen auf Basis der Sicherheitsdaten an einen externen Prozessor (200; 200a; 200b; 200'; 200"; 510; 1200; 2200), wenn der Speicher (120; 1110; 2110) aktiviert ist,
Empfangen von zweiten Authentifizierungsinformationen von dem externen Prozessor (200; 200a; 200b; 200'; 200"; 510; 1200; 2200),
wobei das Feststellen der Aktivierung oder Deaktivierung ein Vergleichen der Benutzerauthentifizierungseingabe mit ersten Authentifizierungsinformationen, die in dem sicheren Element (100) gespeichert sind, und den zweiten Authentifizierungsinformationen, und ein Feststellen, dass der Speicher (120) zu aktivieren ist, falls die Benutzerauthentifizierungseingabe zu den ersten Authentifizierungsinformationen bzw. den zweiten Authentifizierungsinformationen passt, aufweist.

12. Verfahren nach Anspruch 11, wobei das sichere Element (100; 100a; 100b; 100"; 520; 1100; 2100) die Benutzerauthentifizierungseingabe von der Eingabevorrichtung (310) über eine erste Schnittstelle (110) empfängt und das sichere Element (100; 100a; 100b; 100"; 520; 1100; 2100) die zweiten Authentifizierungsinformationen von dem externen Prozessor (200; 200a; 200b; 200"; 510; 1200; 2200) empfängt und die Sicherheitsinformationen (SIF) über eine zweite Schnittstelle (130) an den externen Prozessor (200; 200a; 200b; 200"; 510; 1200; 2200) überträgt.

13. Elektronische Vorrichtung, aufweisend:
eine Eingabevorrichtung (310), die so konfiguriert ist, dass sie eine Benutzereingabe (UAI; UPW; UFP; PIN) erfasst;
ein sicheres Element (100; 100a; 100b; 100'; 100"; 520; 1100; 2100), das so konfiguriert ist, dass es die Benutzereingabe (UAI; UPW; UFP; PIN) von der Eingabevorrichtung (310) empfängt und auf Basis der Benutzereingabe (UAI; UPW; UFP; PIN) feststellt, ob ein Sicherheitsvorgang auszuführen ist; und
einen Anwendungsprozessor (200; 200a; 200b; 200'; 200"; 510; 1200; 2200), der so konfiguriert ist, dass er mit dem sicheren Element Sicherheitsinformationen austauscht, wenn das sichere Element (100; 100a; 100b; 100'; 100"; 520; 1100; 2100) den Sicherheitsvorgang ausführt,
wobei die Eingabevorrichtung (310) die Benutzereingabe an das sichere Element (100; 100a; 100b; 1100; 2100) überträgt,
wobei das Sicherheitselement (100; 100a; 100b; 100'; 100"; 520; 1100; 2100) aufweist:
einen Speicher (120), der so konfiguriert ist, dass er Sicherheitsdaten speichert,
eine erste Schnittstellenschaltung (110; 110'), die so konfiguriert ist, dass sie die Benutzereingabe (UAI; UPW; UFP; PIN) von der Eingabevorrichtung (310) empfängt, und
eine zweite Schnittstellenschaltung (130; 130'), die so konfiguriert ist, dass sie die Sicherheitsinformationen mit dem Anwendungsprozessor (200; 200a; 200b; 200'; 200"; 510; 1200; 2200) austauscht, wobei die Sicherheitsinformationen auf den Sicherheitsdaten basieren,
wobei die Eingabevorrichtung (310) die Benutzereingabe an den Anwendungsprozessor (200; 200a, 200b; 1200; 2200) überträgt,
wobei die zweite Schnittstelle (130; 130') so konfiguriert ist, dass sie zweite Authentifizierungsinformationen von dem Anwendungsprozessor (200; 200a; 200b; 200'; 200"; 510; 1200; 2200) empfängt, und
wobei das sichere Element einen Prozessor (140) aufweist, der so konfiguriert ist, dass er die Benutzereingabe (UAI; UPW; UFP; PIN) mit ersten Authentifizierungsinformationen, die in dem sicheren Element (100; 100a; 100b; 100'; 100"; 520; 1100; 2100) gespeichert sind, und den zweiten Authentifizierungsinformationen vergleicht, und, wenn festgestellt wird, dass die Benutzereingabe (UAI; UPW; UFP; PIN) dieselbe ist wie die ersten Authentifizierungsinformationen bzw. die zweiten Authentifizierungsinformationen, der Prozessor (140) feststellt, dass die Benutzerauthentifizierung erfolgreich war.

14. Elektronische Vorrichtung nach Anspruch 13, wobei der Anwendungsprozessor die Benutzereingabe von der Eingabevorrichtung (310) empfängt, eine Benutzerauthentifizierung durch Vergleichen der empfangenen Benutzereingabe mit dritten Authentifizierungsinformationen, die in dem Anwendungsprozessor (200; 200a; 200b; 200'; 200"; 510; 1200; 2200) gespeichert sind, durchführt, und, wenn die Benutzerauthentifizierung erfolgreich war, die Benutzereingabe als die zweiten Authentifizierungsinformationen an das sichere Element (100; 100a; 100b; 100'; 100"; 520; 1100; 2100) überträgt.

15. Elektronische Vorrichtung nach einem der Ansprüche 13 bis 14, ferner aufweisend:
einen ersten Kanal (CHa), der so konfiguriert ist, dass er die Eingabevorrichtung (310) mit dem Anwendungsprozessor (200) elektrisch verbindet;
einen zweiten Kanal (CHb), der so konfiguriert ist, dass er die Eingabevorrichtung (310) mit dem sicheren Element elektrisch verbindet; und
einen dritten Kanal (CHc), der so konfiguriert ist, dass er den Anwendungsprozessor (200) mit dem sicheren Element (100) elektrisch verbindet.

16. Elektronische Vorrichtung nach einem der Ansprüche 13 bis 15, wobei das sichere Element (100'; 100") die Benutzereingabe an den Anwendungsprozessor (200'; 200") überträgt.

17. Elektronische Vorrichtung nach einem der Ansprüche 13 bis 16, wobei die Eingabevorrichtung (310) ein Touchpad, einen Touchscreen, einen Bioinformationssensor oder eine Stimmerkennungsvorrichtung aufweist.

## Revendications

1. Elément de sécurité (SE), comprenant :
une mémoire (120 ; 1110 ; 2110) configurée pour mettre en mémoire des données de sécurité ;
une première interface (110 ; 110') configurée pour recevoir une entrée d'utilisateur (UAI ; UPW ; UFP ; PIN) d'un dispositif d'entrée externe (310) ;
un processeur (140) configuré pour effectuer une authentification de l'utilisateur, sur la base de l'entrée d'utilisateur (UAI ; UPW ; UFP ; PIN), et pour activer la mémoire (120 ; 1110 ; 2110) lorsque l'authentification de l'utilisateur est réussie ; et
une deuxième interface (130 ; 130') configurée pour transmettre des informations de sécurité (SIF), sur la base des données de sécurité, à un processeur externe (200 ; 200a ; 200b ; 200' ; 200" ; 510 ; 1200 ; 2200),
la deuxième interface (130 ; 130') est configurée pour recevoir une deuxième information d'authentification du processeur externe (200 ; 200a ; 200b ; 200' ; 200" ; 510 ; 1200 ; 2200), et
le processeur (140) compare l'entrée d'utilisateur (UAI ; UPW ; UFP ; PIN) à la première information d'authentification mise en mémoire dans l'élément de sécurité (100 ; 100a ; 100b ; 100' ; 100" ; 520 ; 1100 ; 2100) et à la deuxième information d'authentification, et, lorsqu'il est déterminé que l'entrée d'utilisateur (UAI ; UPW ; UFP ; PIN) est la même que la première information d'authentification et que la deuxième information d'authentification respectivement, le processeur (140) détermine que l'authentification de l'utilisateur a réussi.

2. Elément de sécurité selon la revendication 1, dans lequel l'accès à la première interface (110 ; 110') par le processeur externe (200 ; 200a ; 200b ; 200' ; 200" ; 510 ; 1200 ; 2200) est limité.

3. Elément de sécurité selon la revendication 1 ou 2, dans lequel, lorsque la deuxième information d'authentification est reçue, le processeur (140) détermine si l'entrée d'utilisateur (UAI ; UPW ; UFP ; PIN) a été reçue, et
lorsqu'il est déterminé que l'entrée d'utilisateur (UAI ; UPW ; UFP ; PIN) n'a pas été reçue, le processeur (140) détermine que l'authentification de l'utilisateur a échoué.

4. Elément de sécurité selon l'une quelconque des revendications 1 à 3, dans lequel, lorsque l'entrée d'utilisateur (UAI ; UPW ; UFP ; PIN) est la même que la première information d'authentification mise en mémoire dans l'élément de sécurité (100 ; 100a ; 100b ; 100' ; 100" ; 520 ; 1100 ; 2100), et qu'un résultat d'authentification représentant une authentification réussie est reçu du processeur externe (200), le processeur (140) détermine que l'authentification de l'utilisateur a réussi.

5. Elément de sécurité selon l'une quelconque des revendications 1 à 4, dans lequel les informations de sécurité comprennent les données de sécurité, un résultat d'un calcul effectué sur la base des données de sécurité, ou des données cryptées générées par chiffrement des données de sécurité.

6. Elément de sécurité selon l'une quelconque des revendications 1 à 5, dans lequel la première interface (110 ; 110') reçoit l'entrée d'utilisateur du processeur externe (200 ; 200a ; 200b ; 200' ; 200" ; 510 ; 1200 ; 2200) en réponse à une requête de réception d'entrée d'utilisateur reçue du processeur externe (200 ; 200a ; 200b ; 200' ; 200" ; 510 ; 1200 ; 2200) par le biais de la deuxième interface (130 ; 130').

7. Elément de sécurité selon l'une quelconque des revendications 1 à 6, dans lequel la première interface (110) reçoit l'entrée d'utilisateur (UAI ; UPW ; UFP ; PIN) par surveillance d'un échange de données entre le dispositif d'entrée externe (310) et le processeur externe (200 ; 200a ; 200b ; 510 ; 1200 ; 2200).

8. Elément de sécurité selon l'une quelconque des revendications 1 à 7, dans lequel la deuxième interface (130') transmet l'entrée d'utilisateur (UAI) reçue par le biais de la première interface (110') au processeur externe (200').

9. Elément de sécurité selon l'une quelconque des revendications 1 à 8, comprenant en outre une troisième interface (180) configurée pour transmettre l'entrée d'utilisateur (UAI) au processeur externe (200").

10. Elément de sécurité selon l'une quelconque des revendications 1 à 9, dans lequel
l'entrée d'utilisateur (UAI ; UPW ; UFP ; PIN) comprend des informations d'authentification à base de connaissances ou des informations de bio-authentification,
les informations d'authentification à base de connaissances comprennent une forme de mouvement, une forme vocale, une forme tactile, un mot de passe, des données d'image, ou des données de caractère, et
les informations de bio-authentification comprennent des informations d'empreinte digitale, des informations d'iris, des informations de rétine, des informations de veine, des informations faciales, ou des informations vocales.

11. Procédé permettant de faire fonctionner un élément de sécurité (SE), le procédé comprenant :
la réception d'une entrée d'authentification de l'utilisateur d'un dispositif d'entrée (310) ;
la détermination de l'activation ou de la désactivation d'une mémoire (120 ; 1110 ; 2110) qui met en mémoire des données de sécurité, sur la base de l'entrée d'authentification de l'utilisateur ; et
la transmission d'informations de sécurité sur la base des données de sécurité à un processeur externe (200 ; 200a ; 200b ; 200' ; 200" ; 510 ; 1200 ; 2200) lorsque la mémoire (120 ; 1110 ; 2110) est activée,
la réception de la deuxième information d'authentification du processeur externe (200 ; 200a ; 200b ; 200' ; 200" ; 510 ; 1200 ; 2200),
dans lequel la détermination de l'activation ou de la désactivation comprend la comparaison de l'entrée d'authentification de l'utilisateur à la première information d'authentification mise en mémoire dans l'élément de sécurité (100) et à la deuxième information d'authentification, et la détermination que la mémoire (120) doit être activée si l'entrée d'authentification de l'utilisateur est mise en correspondance avec la première information d'authentification et la deuxième information d'authentification, respectivement.

12. Procédé selon la revendication 11, dans lequel l'élément de sécurité (100 ; 100a ; 100b ; 100" ; 520 ; 1100 ; 2100) reçoit l'entrée d'authentification de l'utilisateur du dispositif d'entrée (310) par le biais d'une première interface (110) et l'élément de sécurité (100 ; 100a ; 100b ; 100" ; 520 ; 1100 ; 2100) reçoit la deuxième information d'authentification du processeur externe (200 ; 200a ; 200b ; 200" ; 510 ; 1200 ; 2200) et transmet les informations de sécurité (SIF) au processeur externe (200 ; 200a ; 200b ; 200" ; 510 ; 1200 ; 2200) par le biais d'une deuxième interface (130).

13. Dispositif électronique, comprenant :
un dispositif d'entrée (310) configuré pour détecter une entrée d'utilisateur (UAI ; UPW ; UFP ; PIN) ;
un élément de sécurité (100 ; 100a ; 100b ; 100' ; 100" ; 520 ; 1100 ; 2100) configuré pour recevoir l'entrée d'utilisateur (UAI ; UPW ; UFP ; PIN) du dispositif d'entrée (310) et pour déterminer, sur la base de l'entrée d'utilisateur (UAI ; UPW ; UFP ; PIN), l'opportunité d'effectuer une opération de sécurité ; et
un processeur d'applications (200 ; 200a ; 200b ; 200' ; 200" ; 510 ; 1200 ; 2200) configuré pour échanger des informations de sécurité avec l'élément de sécurité lorsque l'élément de sécurité (100 ; 100a ; 100b ; 100' ; 100" ; 520 ; 1100 ; 2100) exécute l'opération de sécurité,
dans lequel le dispositif d'entrée (310) transmet l'entrée d'utilisateur à l'élément de sécurité (100 ; 100a ; 100b ; 1100 ; 2100),
dans lequel l'élément de sécurité (100 ; 100a ; 100b ; 100' ; 100" ; 520 ; 1100 ; 2100) comprend
une mémoire (120) configurée pour mettre en mémoire des données de sécurité,
un premier circuit d'interface (110 ; 110') configuré pour recevoir l'entrée d'utilisateur (UAI ; UPW ; UFP ; PIN) du dispositif d'entrée (310), et
un deuxième circuit d'interface (130 ; 130') configuré pour échanger les informations de sécurité avec le processeur d'applications (200 ; 200a ; 200b ; 200' ; 200" ; 510 ; 1200 ; 2200), dans lequel les informations de sécurité sont basées sur les données de sécurité,
le dispositif d'entrée (310) transmet l'entrée d'utilisateur au processeur d'applications (200 ; 200a ; 200b ; 1200 ; 2200),
la deuxième interface (130 ; 130') est configurée pour recevoir une deuxième information d'authentification du processeur d'applications (200 ; 200a ; 200b ; 200' ; 200" ; 510 ; 1200 ; 2200), et
l'élément de sécurité comprend un processeur (140) qui est configuré pour comparer l'entrée d'utilisateur (UAI ; UPW ; UFP ; PIN) à une première information d'authentification mise en mémoire dans l'élément de sécurité (100 ; 100a ; 100b ; 100' ; 100" ; 520 ; 1100 ; 2100) et à la deuxième information d'authentification, et, lorsqu'il est déterminé que l'entrée d'utilisateur (UAI ; UPW ; UFP ; PIN) est la même que la première information d'authentification et que la deuxième information d'authentification respectivement, le processeur (140) détermine que l'authentification de l'utilisateur a réussi.

14. Dispositif électronique selon la revendication 13, dans lequel le processeur d'applications reçoit l'entrée d'utilisateur du dispositif d'entrée (310), effectue une authentification de l'utilisateur en comparant l'entrée d'utilisateur reçue à la troisième information d'authentification mise en mémoire dans le processeur d'applications (200 ; 200a ; 200b ; 200' ; 200" ; 510 ; 1200 ; 2200), et, lorsque l'authentification de l'utilisateur réussit, transmet l'entrée d'utilisateur en tant que deuxième information d'authentification à l'élément de sécurité (100 ; 100a ; 100b ; 100' ; 100" ; 520 ; 1100 ; 2100).

15. Dispositif électronique selon l'une quelconque des revendications 13 à 14, comprenant en outre :
un premier canal (CHa) configuré pour connecter électriquement le dispositif d'entrée (310) au processeur d'applications (200) ;
un deuxième canal (CHb) configuré pour connecter électriquement le dispositif d'entrée (310) à l'élément de sécurité ; et
un troisième canal (CHc) configuré pour connecter électriquement le processeur d'applications (200) à l'élément de sécurité (100).

16. Dispositif électronique selon l'une quelconque des revendications 13 à 15, dans lequel l'élément de sécurité (100' ; 100") transmet l'entrée d'utilisateur au processeur d'applications (200' ; 200").

17. Dispositif électronique selon l'une quelconque des revendications 13 à 16, dans lequel le dispositif d'entrée (310) comprend un pavé tactile, un écran tactile, un biocapteur d'information, ou un dispositif de reconnaissance vocale.
